# FASCICULE DE BREVET EUROPEEN

(11) **EP 3 484 972 B1**
(45) Date de publication et mention de la délivrance du brevet: **04.11.2020**
(21) Numéro de dépôt: 17742830.7
(22) Date de dépôt: 07.07.2017
(51) Int. Cl.: C09J 175/06, B32B 7/12, B32B 15/095, C08G 18/79, C08G 18/42, C08G 18/10

(54) **COMPOSITION ADHESIVE BICOMPOSANTE A BASE DE POLYURETHANE**
ZWEI-KOMPONENTEN-KLEBSTOFFZUSAMMENSETZUNG AUF BASIS VON POLYURETHAN
ADHESIVE DUAL-COMPONENT COMPOSITION BASED ON POLYURETHANE

(30) Priorité: 12.07.2016 FR 1656654
(43) Date de publication de la demande: 22.05.2019
(73) Titulaire: Bostik SA, 92700 Colombes (FR)
(72) Inventeur: PARDAL, Francis, 60200 Compiègne (FR); MICHAUD, Guillaume, 60200 Compiegne (FR); WIEGAND, Aurélien, 60750 Choisy au Bac (FR); PENET, David, 60170 Ribecourt (FR)
(74) Mandataire: Arkema Patent
(86) Numéro de dépôt international: PCT/FR2017/051862
(87) Numéro de publication internationale: WO 2018/011491

(56) Documents cités:
- FR-A1- 3 015 510
- US-A- 3 915 935
- US-A1- 2006 046 067
- US-B1- 7 129 312

## Description

### DOMAINE DE L'INVENTION

La présente invention concerne une composition adhésive bicomposante à base de polyuréthane. L'invention concerne également une structure multicouche (ou complexe) comprenant au moins deux couches de matériau liées entre elle par une couche de la composition adhésive selon l'invention. Elle concerne également un procédé de complexage adapté à la fabrication de ladite structure multicouche, ainsi que l'utilisation d'une structure multicouche selon l'invention dans le domaine de l'emballage flexible, notamment pour la fabrication d'emballages flexibles destinés au conditionnement de produits alimentaires, cosmétiques, pharmaceutiques ou d'hygiène corporelle.

### ARRIERE-PLAN TECHNOLOGIQUE

Les emballages flexibles destinés au conditionnement des produits les plus divers, tels ceux fabriqués par les industries agroalimentaire, cosmétique ou de la détergence, sont généralement constitués de plusieurs couches (sous forme de feuilles ou de films) dont l'épaisseur est comprise entre 5 et 150 µm et qui sont constituées de différents matériaux comme le papier, un métal (par exemple l'aluminium) ou encore des polymères thermoplastiques. La structure multicouche correspondante, dont l'épaisseur peut varier de 20 à 400 µm, permet de combiner les propriétés des différentes couches individuelles de matériau et d'offrir ainsi au consommateur un ensemble de caractéristiques adaptées à l'emballage souple final comme, par exemple :
- son apparence visuelle (notamment celle des éléments imprimés présentant l'information concernant le produit emballé et destinée au consommateur),
- un effet de barrière à l'humidité, aux gaz (O₂, N₂, CO₂, et leurs mélanges) et/ou à la lumière et aux rayons ultra-violet (UV),
- un contact alimentaire sans risques de toxicité ou de modification des propriétés organoleptiques des aliments emballés,
- une résistance chimique pour certains produits tels que le ketchup ou le savon liquide,
- une bonne tenue à température élevée, par exemple en cas de pasteurisation ou de stérilisation. En particulier, le joint adhésif formé par réticulation de la couche adhésive reliant les couches individuelles de l'emballage doit conserver un niveau de cohésion suffisant après traitement thermique, afin d'éviter tout phénomène de délamination.

Pour constituer l'emballage final, le complexe est généralement mis en forme par thermoscellage, à une température variant d'environ 120 à 250 °C, cette dernière technique étant également utilisée pour la fermeture de l'emballage autour du produit destiné au consommateur.

Les diverses couches de matériau qui composent le complexe sont combinées ou assemblées par contrecollage au cours de procédés industriels de complexage (également dénommés par le terme "lamination").

Ces procédés mettent en œuvre des adhésifs (ou colles) et des dispositifs (ou machines) conçus à cet effet. Le complexe ainsi obtenu est souvent lui-même qualifié par le terme "laminé" et la composition adhésive employée à cet effet « adhésif de lamination ».

Ces procédés comprennent tout d'abord une étape d'enduction de la composition adhésive sur une première couche de matériau, qui consiste en un dépôt d'une couche de colle continue et d'épaisseur contrôlée généralement inférieure à 10 µm, correspondant à une quantité de colle (ou grammage) également contrôlée, ne dépassant pas en général 10 g/m². Cette étape d'enduction est suivie d'une étape de contrecollage d'une deuxième couche de matériau, identique ou différent de la première, consistant en l'application sous pression de cette deuxième couche de matériau sur la première couche de matériau recouverte de la couche de colle.

Les compositions adhésives bicomposantes à base de polyuréthane sont couramment utilisées pour ce type d'application.

Ces compositions sont fournies au complexeur sous la forme de 2 compositions (ou composants) :
- l'un (appelé composant -NCO) contenant des entités chimiques porteuses de groupements terminaux isocyanates, et
- l'autre (appelé composant -OH) contenant des entités chimiques porteuses de groupements terminaux hydroxyles.

Le mélange de ces 2 composants est réalisé à chaud à une température comprise entre 35 et 80 °C par l'opérateur de la machine de complexage, préalablement à sa mise en oeuvre et permet, grâce à une viscosité appropriée, le fonctionnement correct de celle-ci.

A l'issue de l'enduction du mélange ainsi obtenu et de l'opération de contrecollage, les groupements isocyanates du composant -NCO réagissent avec les groupements hydroxyle du composant -OH, selon une réaction dite de réticulation, pour former un polyuréthane qui se présente sous la forme d'un réseau tridimensionnel comportant des groupes uréthanes, assurant la cohésion du joint adhésif entre les 2 couches minces contrecollées. Le temps requis pour compléter cette réaction de réticulation et assurer ainsi le niveau de cohésion requis est en général de l'ordre de 1 à 30 jours.

Les entités chimiques présentes dans le composant -NCO sont le plus souvent des composés chimiques polymériques porteuses de groupements terminaux isocyanates (souvent dénommés prépolymères car précurseurs du polyuréthane réticulé final constitutif du joint adhésif), lesquels sont généralement eux-mêmes des polyuréthanes produits par la réaction d'un excès stoechiométrique d'au moins un diisocyanate avec au moins un polyéther polyol et/ou polyester polyol.

Les entités chimiques présentes dans le composant -OH sont le plus souvent des composés polymériques ou non, parfois d'origine naturelle (comme l'huile de ricin), qui incluent généralement des polymères de type polyéther polyol et/ou polyester polyol, de masse moléculaire moyenne en nombre Mn (ou de masse molaire) allant de 400 à 4000 g/mol.

Toutefois, ces compositions adhésives à base de polyuréthane présentent en général l'inconvénient de mettre en œuvre un composant -NCO comprenant des teneurs résiduelles importantes en monomères diisocyanates provenant de la réaction de synthèse du prépolymère de polyuréthane porteur de groupements NCO (ou à terminaisons NCO). Ces monomères diisocyanates résiduels sont en effet susceptibles de conduire à un certain nombre d'effets indésirables.

On entend par « monomère diisocyanate », un composé hydrocarboné de faible masse molaire (inférieure à 300 g/mol) possédant deux groupes isocyanate. En particulier, on entend par « monomère diisocyanate aromatique », un monomère diisocyanate tel que défini précédemment, dans lequel l'un des groupes NCO est relié par une liaison covalente à un atome de carbone faisant parti d'un cycle hydrocarboné aromatique tel qu'un groupe phényle. En particulier, on entend par « monomère diisocyanate aliphatique », un monomère diisocyanate non aromatique ou un monomère diisocyanate dans lequel aucun des groupes NCO n'est relié par une liaison covalente à un atome de carbone faisant parti d'un cycle hydrocarboné aromatique tel qu'un groupe phényle.

L'inconvénient des monomères diisocyanates aromatiques tels que le toluène diisocyanate (TDI) ou le diisocyanate de diphénylméthane (MDI), est qu'ils sont susceptibles de migrer à travers l'emballage, et de former par hydrolyse au contact de l'eau ou de l'humidité présente dans les aliments ou autres produits emballés, des amines aromatiques primaires, considérées comme toxiques.

Les monomères diisocyanates aliphatiques tels que l'isophorone diisocyanate (IPDI) peuvent également poser des problèmes de santé, étant classés comme sensibilisants.

En outre, certains monomères diisocyanates peuvent générer des émissions toxiques pour les êtres vivants. Ces vapeurs peuvent être libérées, à température ambiante pour les monomères les plus volatiles, ou à chaud lorsque la composition adhésive est soumise à de fortes températures.

Afin de tenir compte des effets indésirables liés à la présence de ces monomères diisocyanates, la règlementation impose pour certains types de produits notamment dans le domaine alimentaire, un étiquetage particulier du produit, dès lors que la concentration en monomères diisocyanates aromatiques dépasse 0,1% en poids du poids du produit et/ou dès lors que la concentration en monomères diisocyanates aliphatiques dépasse 0,5% en poids du poids du produit.

Il est donc souhaitable de mettre à disposition du public des compositions adhésives bicomposantes dans lequel le composant -NCO, à base de polyuréthane à terminaisons NCO, est substantiellement voire totalement exempte de monomères diisocyanates résiduels, et de préférence dans lequel la teneur monomères diisocyanates résiduels est inférieure ou égale aux seuils règlementaires sus-mentionnés.

La demande US 7,129,312 (Henkel KGAA) décrit une composition adhésive à base de polyuréthane à terminaisons NCO, dans laquelle le polyuréthane à terminaisons NCO est obtenu par réaction :
- d'au moins un polyol de masse moléculaire moyenne en nombre Mn allant de 400 à 20000, avec
- une composition comprenant essentiellement un prépolymère de polyuréthane à terminaisons NCO obtenu par réaction d'un excès stoechiométrique d'au moins monomère diisocyanate de masse molaire inférieure ou égale à 500, avec un diol, différent du polyol précité, de masse moléculaire moyenne en nombre Mn inférieure ou égale à 2000,
- composition dans laquelle la quantité de monomères diisocyanates non réagis a été réduite en post synthèse du prépolymère de polyuréthane à terminaisons NCO, par élimination de ces derniers ou séparation de ceux-ci dudit prépolymère.

La composition adhésive peut comprendre en outre au moins un triisocyanate capable de migrer et ayant une pression de vapeur saturante inférieure au MDI (diisocyanate de diphénylméthane). L'ajout de ce promoteur d'adhérence peut se faire soit au cours de la synthèse du prépolymère de polyuréthane, soit immédiatement en post-synthèse du prépolymère de polyuréthane, soit ultérieurement au cours de la formulation de la composition adhésive, par exemple après mélange des composants -NCO et -OH.

Ces compositions adhésives ne donnent toutefois pas entière satisfaction, et restent à améliorer sur un certain nombre de points, notamment au regard de leurs performances adhésives pour le collage de matériau métallique.

En effet, il a été observé que ces compositions ne convenaient pas le collage de matériaux métalliques, en raison d'un niveau de cohésion insuffisant, et ne convenaient pas de fait pour fabriquer des structures multicouches d'emballages flexibles à base de matériaux métalliques.

La demande US 2006/046067 A1 décrit une composition adhésive bicomposants à base de polyuréthane qui peut être utilisée pour la fabrication d'une structure multicouche pour emballages stérilisables. La composition adhésive bicomposants comprend un prépolymère de polyuréthane obtenu par réaction d'un mélange d'IPDI (isophorone diisocyanate) et d'un triisocyanate isocyanurate d'IPDI avec un mélange d'un polyester diol 1 et 2 et de bisphénol A propoxylé, avec un aminosilane, et un deuxième composant comprenant au moins un polyester polyol ramifié et une résine époxydée issue de bisphénol A et d'épichlorhydrine.

La demande US 3 915 935 A décrit une composition adhésive bicomposants à base de polyuréthanes, qui comprend un prépolymère de polyuréthane obtenu par réaction d'un polyisocyanate avec un polyester polyol et un polyester polyols liquide, saturé et branché.

La demande FR 3 015 510 A1 décrit une composition adhésive réticulable comprenant un polyuréthane susceptible d'être obtenu par réaction de polyaddition d'au moins un diisocyanate aromatique ou aliphatique diisymétrique comme l'isophorone diisocyanate avec au moins un polyéther diol.

En outre, le procédé de préparation des compositions adhésives de l'art antérieur est contraignant car il nécessite notamment la mise en oeuvre d'une étape supplémentaire destinée à éliminer ou réduire l'excédent de monomères diisocyanates non réagis, qui doit être modifiée selon le type de monomères diisocyanate à éliminer. En effet, dans la composition décrite, la quantité de monomères diisocyanates non réagis est réduite après synthèse du prépolymère de polyuréthane en séparant les monomères diisocyanates non réagis de ce dernier, soit par précipitation du prépolymère en présence de solvant puis filtration ou centrifugation, soit par extraction sélective des monomères par exemple à l'aide de CO₂ supercritique ou d'un solvant, soit par distillation de ces derniers par exemple sous pression réduite, dépendant de la nature des monomères à éliminer.

Par ailleurs, l'utilisation de quantité importante de solvant dans les compositions adhésives est peu souhaitée, car cela conduit à un procédé de complexage de faible cadence, peu compacte, et potentiellement plus dangereux dans le cas de solvant inflammable et volatil.

Ainsi, il existe un besoin de mettre au point une composition adhésive à base de polyuréthane ne présentant pas les inconvénients de l'art antérieur sus-cité, et convenant à la fabrication d'un large éventail de structures multicouche, notamment celles comprenant au moins une couche de matériau métallique, et utilisables pour la fabrication d'emballages flexibles.

En particulier, on cherche à mettre au point une composition adhésive à base de polyuréthane simple à préparer et facile à mettre en œuvre par un procédé industriel de complexage classique, pouvant être mise en œuvre à une température inférieure ou égale à 60°C et de préférence inférieure ou égale à 50°C et suffisamment stable thermiquement pour être mise en œuvre dans un procédé de complexage.

Plus particulièrement, on cherche à mettre au point un composition adhésive à base de polyuréthane qui soit substantiellement ou totalement exempte de solvant et de monomères diisocyanates résiduels, et présente d'excellentes performances adhésives permettant ainsi de fabriquer des structures multicouches destinées à l'emballage de produits divers dans le domaine alimentaire, destinées ou non à subir un traitement thermique tel qu'une pasteurisation ou une stérilisation.

Il a maintenant été trouvé que la composition adhésive objet de la présente demande permettait de répondre à ses besoins.

En particulier, la composition adhésive selon l'invention permet de fabriquer avec excellent un niveau de cohésion, différents types de laminés utilisables pour la fabrication d'emballages flexibles, y compris ceux à base de matériaux métalliques.

En particulier, le procédé de préparation du prépolymère de polyuréthane selon l'invention permet de préparer une composition adhésive substantiellement ou totalement exempte de solvant et de monomères diisocyanates résiduels en un nombre réduit d'étapes par rapport à l'art antérieur. En effet, le procédé de préparation du prépolymère de polyuréthane selon l'invention ne nécessite pas de mettre en œuvre après synthèse dudit prépolymère une étape additionnelle de séparation ou d'élimination de solvant et/ou de monomère diisocyanate en excès.

En particulier, la composition adhésive selon l'invention présente une teneur en monomère diisocyanate suffisamment basse pour pouvoir être utilisée pour fabriquer des structures multicouches destinées à l'emballage et au conditionnement de produits alimentaires, cosmétiques, pharmaceutiques ou d'hygiène corporelle.

En particulier, la composition adhésive selon l'invention présente une viscosité adaptée et est suffisamment stable pour être mise en œuvre dans des procédés industriels de complexage classiques à des températures allant de 40°C à 60°C, et de préférence égale à 50°C environ.

En particulier, la composition adhésive selon l'invention permet également d'obtenir une structure multicouche résistant à un traitement thermique à haute température allant de 60°C à 135°C, tel qu'une pasteurisation (70°C à 99°C) et mieux encore une stérilisation (100°C à 135°C).

Le niveau de cohésion et la tenue thermique des compositions adhésives peuvent être évalués de manière bien connue de l'homme du métier, tel qu'illustré dans les exemples.

### RESUME DE L'INVENTION

Un premier objet de l'invention concerne une composition adhésive bicomposante à base de polyuréthane comprenant un composant -NCO et un composant -OH tels que :
- le composant -NCO est une composition comprenant :
   A) au moins un prépolymère de polyuréthane comportant au moins deux groupements terminaux NCO obtenu par réaction de polyaddition :
      - d'au moins un monomère diisocyanate dissymétrique et
      - d'au moins un diol,
   B) au moins un triisocyanate choisi parmi les isocyanurates, les biurets, les adduits de diisocyanates et de triols, et leurs mélanges,
- le composant -OH est une composition comprenant au moins un polyol,
- au moins un des polyols ou diols est choisi parmi les polyéther polyols (ou polyéther diols),
- au moins un des polyols ou diols est choisi parmi les polyester polyols (ou polyester diols), et
- le rapport pondéral de la quantité de polyéther polyol(s) sur la quantité de polyester polyol(s), noté r₄, va de 0,6 à 2,2, préférentiellement de 0,7 à 2,0.

Selon un mode de réalisation, le prépolymère de polyuréthane à terminaisons NCO utilisé selon l'invention est obtenu par réaction de polyaddition :
- d'au moins un monomère diisocyanate dissymétrique choisi parmi :
- l'isophorone diisocyanate (IPDI),
- le 2,4-toluène diisocyanate (2,4-TDI) et sa forme hydrogénée,
- le 2,4'-diisocyanate de diphénylméthane (2,4'-MDI) et sa forme hydrogénée,
- et leurs mélanges, et
   - d'au moins un diol choisi parmi les mélanges de polyéther diol(s) et de polyester diol(s),
   en présence ou non d'au moins un catalyseur de réaction, à une température de réaction T1 inférieure à 95°C et de préférence allant de 65°C à 80°C, dans des conditions anhydres, et dans des quantités de monomère(s) diisocyanate(s) et de diol(s) conduisant à un rapport molaire NCO/OH, noté r₁, allant de 1,5 à 2,5.

Ce rapport r₁ correspond au rapport du nombre de groupes -NCO (présents dans la quantité totale de monomère(s) diisocyanate(s) utilisé(s) pour synthétiser le prépolymère de polyuréthane à terminaisons NCO) sur le nombre de groupes -OH (présents dans la quantité totale de diol(s) utilisé(s) pour synthétiser le prépolymère de polyuréthane à terminaisons NCO).

Selon un mode de réalisation, le composant -NCO comprend une teneur en monomère(s) diisocyanate(s) aliphatique(s) inférieure ou égale à 0,5% en poids par rapport au poids du composant -NCO, et une teneur en monomère(s) diisocyanate(s) aromatique(s) inférieure ou égale à 0,1% en poids par rapport au poids du composant -NCO.

Selon un mode de réalisation, les composants -NCO et -OH, destinés à être mélangés, sont présents dans la composition adhésive bicomposante selon l'invention, dans des quantités telles que le rapport molaire NCO/OH noté r₃, va de 1 à 2,5, plus préférentiellement de 1,2 à 1,9.

Ce rapport r₃ correspond au rapport du nombre de groupes NCO présents dans la quantité totale de composant NCO destiné à être mélangé sur le nombre de groupes OH présents dans la quantité totale de composant OH destiné à être mélangé.

Selon un mode de réalisation, le rapport molaire du nombre de groupes NCO présents dans la quantité totale de monomère(s) diisocyanate(s) utilisé(s) pour la synthèse du prépolymère de polyuréthane à terminaisons NCO A) sur le nombre de groupes NCO présents dans la quantité totale de triisocyanate(s) B) présent(s) dans le composant -NCO, noté r₂, va de préférence de 3 à 8,5, plus préférentiellement, de 3 à 7, de manière encore plus préférée de 3 à 5, et mieux encore de 3 à 4.

L'invention a également pour objet une structure multicouche comprenant au moins deux couches de matériau liées entre elles par une couche adhésive, caractérisé en ce que ladite couche adhésive est constituée par la composition adhésive selon l'invention à l'état réticulé.

L'invention a également pour objet un procédé de fabrication d'une structure multicouche selon l'invention, comprenant les étapes suivantes :
(i) le mélange des composants -NCO et -OH à une température appropriée, de préférence à une température inférieure ou égale à 60°C, plus préférentiellement inférieure ou égale à 50°C, puis
(ii) l'enduction dudit mélange sur la surface d'une première couche de matériau, puis
(iii) le contrecollage de la surface d'une deuxième couche de matériau sur ladite surface enduite, puis
(iv) la réticulation dudit mélange.

L'invention a également pour objet l'utilisation d'une structure multicouche selon l'invention pour la fabrication d'emballages flexibles, et en particulier d'emballages flexibles, thermoscellables, stérilisables et/ou pasteurisables.

D'autres objets et caractéristiques de la présente invention apparaîtront plus clairement à la lecture de la description et des exemples.

### EXPOSE DETAILLE DES MODES DE REALISATION DE L'INVENTION

Dans la présente demande, en l'absence d'indication contraire :
- les quantités exprimées sous la forme de pourcentage correspondent à des pourcentages poids/poids ;
- les masses moléculaires moyennes en nombre (Mn), exprimées en gramme par mole (g/mol) sont déterminées par calcul par l'analyse de la teneur en groupes terminaux (NCO ou OH) exprimée en milliéquivalent par gramme (méq/g) et la fonctionnalité (nombre de groupe NCO ou OH par mole) de l'entité considérée (prépolymère de polyuréthane à terminaisons NCO, diol ou polyol) ;
- par « monomère diisocyanate dissymétrique », on entend un monomère diisocyanate dont les groupes isocyanate possèdent des réactivités différentes au regard d'un diol donné. En règle générale, un tel monomère ne possède pas d'axe, plan ou centre de symétrie.
- par « polyol », on entend désigner tout composé hydrocarboné, linéaire ou ramifié, cyclique ou acyclique, saturé ou insaturé, aromatique ou aliphatique, comprenant au moins deux groupes (ou fonctions) hydroxyle (OH), et éventuellement un ou plusieurs groupes divalent choisi parmi les groupes éthers (-O-) et carboxyle (-C(=O)O- ou -OC(=O)-).
- par « diol », on entend désigner un polyol tel que défini ci-dessus comprenant deux groupes (ou fonctions) hydroxyle (OH).
- par « triol », on entend désigner un polyol tel que défini ci-dessus comprenant trois groupes (ou fonctions) hydroxyle (OH),
- l'indice hydroxyle d'un polyol (noté IOH) représente le nombre de fonctions hydroxyles par gramme de polyol et est exprimé dans le texte de la présente demande sous la forme du nombre équivalent de milligrammes de potasse (KOH) utilisés dans le dosage des fonctions hydroxyles. L'IOH peut être mesuré expérimentalement par exemple selon la norme ISO 14900 :2001. Dans le cas d'un mélange de polyols, l'IOH peut également être calculé à partir des IOH connus de chacun des polyols et de leur teneur pondérale respective dans ledit mélange.
- la teneur en monomère diisocyanate est mesurée selon la méthode d'analyse suivante reposant sur la réaction spécifique du groupe isocyanate NCO avec une amine (1-(2-méthoxyphényl)pipérazine ou PPZ) pour former des dérivés stables d'urée. Ces dérivés sont obtenus lors de la préparation de l'échantillon d'adhésif par dilution/solubilisation de cet échantillon à l'aide d'une solution d'acétonitrile à 0,02 mol/L de PPZ. Les dérivés de PZZ formés à partir des isocyanates contenus dans l'échantillon à analyser sont ensuite dosés par un système de Chromatographie Liquide Haute Performance (CLHP) à phase inversée en C18 avec un gradient de phase mobile comprenant un mélange d'eau et d'acétonitrile tamponné à l'aide d'une solution aqueuse de tétrabutylammonium bisulfate à 0,2% en poids, à un pH allant de 2 à 3, muni d'un détecteur Ultra-Violet (UV) fonctionnant à 254 nm. Ces composés sont identifiés et quantifiés en comparant leur temps de rétention et leur surface de pics chromatographiques avec ceux des dérivés PPZ étalons obtenus par réaction d'un monomère diisocyanate de nature et concentration connue.
- la viscosité est mesurée à l'aide d'un viscosimètre Brookfield.
- les différents modes de réalisations décrits dans la présente demande peuvent être combinés entre eux.

### Composition adhésive bicomposante :

La présente invention concerne une composition adhésive bicomposante à base de polyuréthane comprenant un composant -NCO et un composant -OH tels que :
- le composant -NCO est une composition comprenant :
   A) au moins un prépolymère de polyuréthane comportant au moins deux groupements terminaux NCO, ledit prépolymère étant obtenu par réaction de polyaddition :
      - d'au moins un monomère diisocyanate dissymétrique et
      - d'au moins un diol,
   B) au moins un triisocyanate choisi parmi les isocyanurates, les biurets, les adduits de diisocyanates et de triols, et leurs mélanges,
- le composant -OH est une composition comprenant au moins un polyol,
- au moins un des polyols ou diols est choisi parmi les polyéther polyols (ou polyéther diols),
- au moins un des polyols ou diols est choisi parmi les polyester polyols (ou polyester diols), et
- le rapport pondéral de la quantité de polyéther polyol(s) sur la quantité de polyester polyol(s), noté r₄, va de 0,6 à 2,2, préférentiellement de 0,7 à 2,0.

### Composant -NCO :

### A) Prépolymère de polyuréthane à terminaisons NCO

Le prépolymère de polyuréthane à terminaisons NCO utilisé selon l'invention peut représenter de 70% à 95% en poids du composant -NCO, de préférence de 75% à 90% en poids, par rapport au poids total du composant -NCO.

Le(s) monomère(s) diisocyanate(s) dissymétrique(s) utilisable(s) pour préparer le prépolymère de polyuréthane à terminaisons NCO A) utilisé selon l'invention peu(ven)t être aliphatique(s) ou aromatique(s).

De préférence, le monomère(s) diisocyanate(s) dissymétrique(s) est(sont) choisi(s) parmi les diisocyanates suivants, et leur mélange :
- l'isophorone diisocyanate (IPDI),
- le 2,4-toluène diisocyanate (2,4-TDI) et sa forme hydrogénée,
- le 2,4'-diisocyanate de diphénylméthane (2,4'-MDI) et sa forme hydrogénée.

En particulier, il(s) peu(ven)t être utilisé(s) sous la forme d'une composition de diisocyanates comprenant au moins 90% en poids, et de préférence au moins 95% en poids par rapport au poids de ladite composition, d'un monomère diisocyanate dissymétrique.

Plus préférentiellement, le monomère(s) diisocyanate(s) dissymétrique(s) est(sont) choisi(s) parmi l'isomère 2,4'-MDI, l'isomère 2,4-TDI, un mélange d'isomères de MDI à 90% en poids au moins, et de préférence à 95% en poids au moins, d'isomère 2,4'-MDI, ou un mélange d'isomères de TDI à 90% en poids au moins, et de préférence à 95% en poids au moins, d'isomère 2,4-TDI, lesdits pourcentages étant exprimés respectivement par rapport au poids du mélange d'isomères.

Le(s) monomère(s) diisocyanate(s) dissymétrique(s) utilisable(s) pour préparer le prépolymère de polyuréthane à terminaisons NCO A) utilisé selon l'invention est (sont) disponible(s) dans le commerce.

Le(s) diol(s) utilisable(s) pour préparer le prépolymère de polyuréthane à terminaisons NCO A) utilisé selon l'invention est (sont) de préférence choisi(s) parmi les polyéther diols, les polyester diols, et leurs mélanges, et plus préférentiellement parmi les mélanges de polyéther diol(s) et de polyester diol(s).

Les mélanges de polyéther diol(s) et de polyester diol(s) peuvent être :
- un mélange de polyéther diols de natures différentes avec un polyester diol ;
- un mélange de polyéther diols de natures différentes avec un mélange de polyester diols de natures différentes ; ou
- un polyéther diol avec un mélange de polyester diols de natures différentes.

Le(s) diol(s) utilisable(s) pour préparer le prépolymère de polyuréthane à terminaisons NCO A) utilisé selon l'invention peu(ven)t être choisi(s) parmi ceux dont la masse moléculaire moyenne en nombre Mn est inférieure ou égale à 4000 g/mol, de préférence parmi ceux dont la masse moléculaire moyenne en nombre Mn est strictement inférieure à 2000 g/mol, et plus préférentiellement ceux dont la masse moléculaire moyenne en nombre Mn va de 400 à 1500 g/mol.

De préférence, le(s) diol(s) utilisable(s) pour préparer le prépolymère de polyuréthane à terminaisons NCO A) utilisé selon l'invention présente(nt) un indice hydroxyle (IOH) allant de 28 à 281 mg KOH/g.

Le(s) polyéther diol(s) utilisable(s) pour préparer le prépolymère de polyuréthane à terminaisons NCO A) utilisé selon l'invention est (sont) de préférence choisi(s) parmi les polyoxyalkylène-diols, dont la partie alkylène (saturée), linéaire ou ramifiée, comprend de 2 à 4 atomes de carbone, et de préférence de 2 à 3 atomes de carbone.

De préférence, le(s) polyéther diol(s) utilisable(s) pour préparer le prépolymère de polyuréthane à terminaisons NCO A) est (sont) choisi(s) parmi les polyoxypropylène diols ayant un indice de polydispersité allant de 1 à 1,4, en particulier allant de 1 à 1,3. Cet indice correspond au rapport de la masse moléculaire moyenne en poids Mw à la masse moléculaire moyenne en nombre Mn du polyéther polyol (Ip =Mw/Mn) déterminées par GPC.

De préférence, le(s) polyéther diol(s) utilisable(s) pour préparer le prépolymère de polyuréthane à terminaisons NCO A) possède(nt) un IOH allant de 50 à 281 mg KOH/g.

Le(s) polyéther diol(s) sus-cité(s) peu(ven)t être préparé(s) de manière conventionnelle, et/ou est (sont) largement disponible(s) dans le commerce, comme illustré dans les exemples.

Le(s) polyester diol(s) utilisable(s) pour préparer le prépolymère de polyuréthane à terminaisons NCO A) utilisé selon l'invention peu(ven)t être choisi(s) parmi :
- des polyester diols issus de la polycondensation d'au moins un diacide carboxylique ou d'au moins un de ses anhydrides ou diesters correspondants, avec au moins un diol,
- des polyester diols issus d'une polymérisation avec ouverture de cycle d'au moins une lactone cyclique avec au moins diol, tels que les polycaprolactone polyols.

Le(s) diacide(s) carboxylique(s) utilisable(s) pour la synthèse des polyester diols sus-cités sont linéaire(s) ou ramifié(s), cyclique(s) ou acyclique(s), saturé(s) ou insaturé(s), aromatique(s) ou aliphatique(s), et comprennent de préférence de 3 à 40 atomes de carbone, et plus préférentiellement de 6 à 10 atomes de carbone.

Le(s) diol(s) utilisable(s) pour la synthèse des polyester diols sus-cités peu(ven)t être choisi(s) parmi les polyalkylène diols, les polyoxyalkylène-diols, et les mélanges de ces composés, la partie alkylène (saturée) de ces composés, étant de préférence linéaire ou ramifiée, et comprenant de préférence de 2 à 40 atomes de carbone, et plus préférentiellement de 2 à 8 atomes de carbone.

Le(s) lactone(s) cyclique(s) utilisable(s) pour la synthèse des polyester diols sus-cités comprennent de préférence de 3 à 7 atomes de carbone.

De préférence, le(s) polyester diol(s) utilisable(s) pour préparer le prépolymère de polyuréthane à terminaisons NCO A) utilisé selon l'invention possède(nt) un IOH allant de 90 à 281 mg KOH/g, préférentiellement de 90 à 280 mg KOH/g.

De préférence, le(s) polyester diol(s) utilisable(s) pour préparer le prépolymère de polyuréthane à terminaisons NCO A) utilisé selon l'invention possède(nt) un IOH allant de 90 à 150 mg KOH/g.

Le(s) polyester diol(s) utilisable(s) pour préparer le prépolymère de polyuréthane à terminaisons NCO A) utilisé selon l'invention peu(ven)t être préparé(s) de manière conventionnelle, et/ou est (sont) largement disponible(s) dans le commerce comme illustré dans les exemples.

Le(s) diol(s) utilisable(s) pour préparer le prépolymère de polyuréthane à terminaisons NCO A) utilisé selon l'invention peu(ven)t être utilisé(s) comme polyol(s) utilisable(s) dans le composant -OH.

Selon un mode de réalisation, le prépolymère de polyuréthane à terminaisons NCO A) est obtenu à partir :
- d'un polyoxyalkylène-diol, dont la partie alkylène (saturée), linéaire ou ramifiée, comprend de 2 à 4 atomes de carbone, et de préférence de 2 à 3 atomes de carbone, ledit polyoxyalkylène-diol ayant de préférence un IOH allant de 50 à 281 mg KOH/g;
- d'un mélange de polyoxyalkylène-diols, dont la partie alkylène (saturée), linéaire ou ramifiée, comprend de 2 à 4 atomes de carbone, et de préférence de 2 à 3 atomes de carbone, lesdits polyoxyalkylène-diols ayant de préférence un IOH allant de 50 à 281 mg KOH/g ;
- d'un mélange de :
   o polyester diol(s) tel(s) que défini(s) ci-dessus, et possédant notamment un IOH allant de 90 à 281 mg KOH/g, de préférence de 90 à 150 mg KOH/g.; et
   o polyoxyalkylène-diol(s), dont la partie alkylène (saturée), linéaire ou ramifiée, comprend de 2 à 4 atomes de carbone, et de préférence de 2 à 3 atomes de carbone, le(s)dit(s) polyoxyalkylène-diol(s) ayant de préférence un IOH allant de 50 à 281 mg KOH/g ;
- d'un polyester diol tel que défini ci-dessus, et possédant notamment un IOH allant de 90 à 281 mg KOH/g, de préférence de 90 à 150 mg KOH/g ; ou
- d'un mélange de polyester diols tels que définis ci-dessus, et possédant notamment un IOH allant de 90 à 281 mg KOH/g, de préférence de 90 à 150 mg KOH/g.

De préférence, les quantités en monomère(s) diisocyanate(s) dissymétrique(s) et en diol(s) utilisés pour la synthèse du prépolymère de polyuréthane à terminaisons NCO A) sont telles que le rapport molaire NCO/OH, noté r₁, va de 1,5 à 2,5, plus préférentiellement de 1,6 à 2,4.

Les quantités pondérales de monomère(s) diisocyanate(s) dissymétrique(s) et de diol(s) à charger dans le réacteur sont déterminées sur la base de ce rapport ainsi que l'indice d'hydroxyle IOH du diol ou mélange de diols, mesuré expérimentalement ou calculé à partir des IOH des diols présents et de leur teneur pondérale respective dans ledit mélange.

Le prépolymère de polyuréthane à terminaisons NCO A) tel que défini précédemment peut être préparé en présence ou non d'au moins un catalyseur de réaction, à une température de réaction T1 inférieure à 95°C et de préférence allant de 65°C à 80°C, dans des conditions anhydres.

L'ensemble des conditions d'obtention du prépolymère de polyuréthane à terminaisons NCO A) sus-décrites permet d'obtenir une concentration en monomère(s) diisocyanate(s) non réagi(s) suffisamment basse en fin de réaction pour que le prépolymère de polyuréthane à terminaisons NCO A) puisse être utilisé directement après sa synthèse dans la préparation du composant -NCO, sans qu'il ne soit nécessaire de le traiter, par exemple par des procédés de purification, distillation ou extraction sélective tels qu'employés dans l'art antérieur, pour éliminer ou réduire l'excès de monomère(s) diisocyanate(s) non réagi(s) présent(s) dans le produit de réaction.

Le composant -NCO obtenu peut ainsi comprendre une teneur en monomère(s) diisocyanate(s) aliphatique(s) inférieure ou égale à 0,5% en poids par rapport au poids du composant -NCO, et une teneur en monomère(s) diisocyanate(s) aromatique(s) inférieure ou égale à 0,1% en poids par rapport au poids du composant -NCO.

De préférence, le composant -NCO ne comprend pas de solvant, ledit solvant pouvant être un solvant organique tel que l'acétate d'éthyle, la méthyl éthyl cétone, le tétrahydrofurane, le méthyl-tétrahydrofurane, ou encore parmi l'Isane® (à base d'isoparaffines, disponible auprès de la société Total) ou l'Exxol® D80 (à base d'hydrocarbures aliphatiques, disponible auprès de la société ExxonMobil Chemical) ou encore le chlorobenzène, le naphta, l'acétone, le n-heptane, le xylène.

### B) Triisocyanate

Le composant -NCO comprend au moins un triisocyanate choisi parmi les isocyanurates, les biurets, les adduits de diisocyanates et de triols, et leurs mélanges.

En particulier, le(s) isocyanurate(s) peuvent être utilisé(s) sous la forme d'un mélange technique de (poly)isocyanurate(s) de pureté supérieure ou égale à 70% en poids en isocyanurate(s) par rapport au poids dudit mélange.

De préférence, le(s) isocyanurate(s) de diisocyanate utilisable(s) selon l'invention répond(ent) à la formule générale (I) suivante : 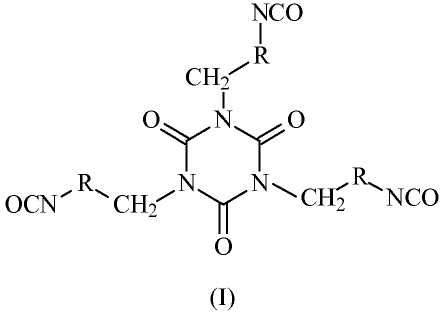 dans laquelle :
R représente un groupe alkylène, linéaire, ramifié ou cyclique, aliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.

A titre d'exemple de trimères de diisocyanates utilisables selon l'invention, on peut citer :
- le trimère isocyanurate d'hexaméthylène diisocyanate (HDI) 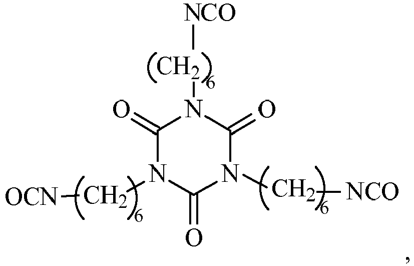
- le trimère isocyanurate d'isophorone diisocyanate (IPDI) 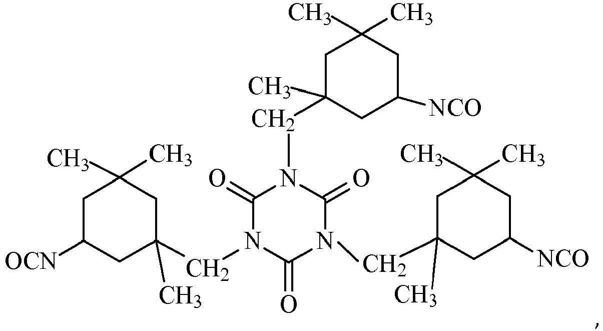
- le trimère isocyanurate de pentaméthylène diisocyanate (PDI) 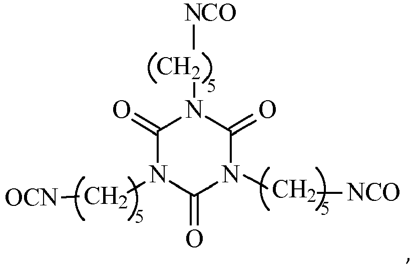
- le trimère isocyanurate du méta-xylène diisocyanate (m-XDI) 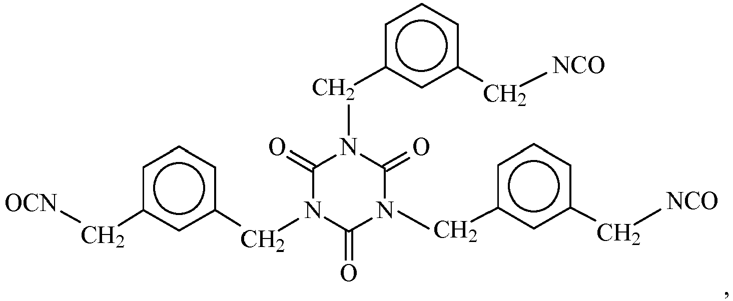
- le trimère isocyanurate du m-XDI, sous forme hydrogénée

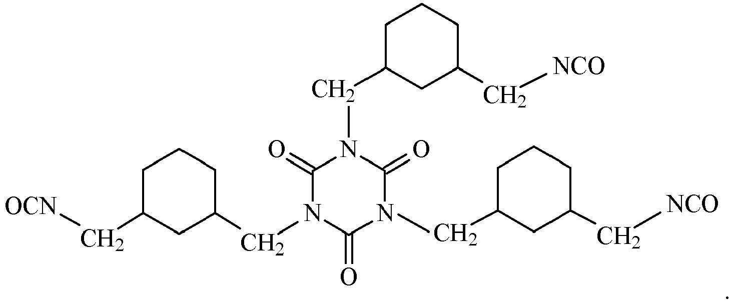

Le(s) diisocyanate(s) utilisable(s) pour préparer les adduits de diisocyanate et triol est (sont) de préférence choisi(s) parmi les monomères de diisocyanates aromatiques ou aliphatiques, et leurs mélanges, et plus préférentiellement les monomères diisocyanates aliphatiques. Le(s) monomère(s) de diisocyanate peu(ven)t être sous forme d'isomère pur ou sous forme de mélange d'isomères.

A titre de triols utilisables pour préparer les adduits de diisocyanate et triol, on peut citer par exemple le Glycérol, Triméthylolméthane (TMM), Triméthyloléthane (TME) et Triméthylolpropane (TMP). De préférence, on utilise le TMP.

A titre d'exemple d'adduits de diisocyanates et de triols utilisables selon l'invention, on peut citer l'adduit de méta-xylène diisocyanate et de triméthylolpropane, tel que représenté ci-dessous.

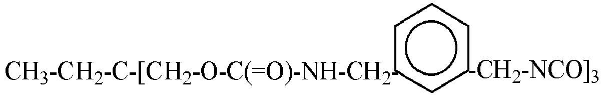

De préférence, les quantités de monomère(s) diisocyanate(s) utilisé(s) pour la synthèse du prépolymère de polyuréthane à terminaisons NCO A) et de triisocyanate(s) présents dans le composant -NCO sont telles que le rapport r₂ va de préférence de 3 à 8,5.

Plus préférentiellement, le rapport r₂ va de 3 à 7, de manière encore plus préférée le rapport r₂ va de 3 à 5, et mieux encore il va de 3 à 4.

La teneur en groupes NCO (noté méq NCO/100g) du composant -NCO va de 200 à 300 méq NCO/100g, préférentiellement de 220 à 280 méq NCO/100g du composant -NCO, et mieux encore de 235 à 265 méq NCO/100g du composant -NCO.

Le composant -NCO est préparé généralement par simple mélange de ses ingrédients à une température inférieure ou égale à 85°C, et de préférence allant de 60°C à 80°C, en conditions anhydres.

### Composant -OH :

Le(s) polyol(s) utilisé(s) selon l'invention peu(ven)t représenter de 85% à 100% en poids du poids du composant -OH, de préférence de 95% à 100% en poids du poids du composant -OH.

A titre de polyols utilisables dans le composant -OH, on peut utiliser n'importe quel polyol habituellement utilisé dans le domaine des adhésifs de lamination bicomposants.

De préférence, le(s) polyol(s) utilisable(s) dans le composant -OH présente(nt) un indice hydroxyle (IOH) allant de 28 à 1057 mg KOH/g.

En particulier, le(s) polyol(s) utilisable(s) dans le composant -OH peu(ven)t être choisi(s) parmi les diols, les triols et leurs mélanges.

En particulier, le(s) polyol(s) utilisables dans le composant -OH peu(ven)t être choisi(s) parmi les polyéthers polyols, les polyester polyols, les prépolymères de polyuréthane comportant au moins deux groupes OH, et les mélanges de ceux-ci, et de préférence parmi les polyéthers polyols, les polyester polyols, et leurs mélanges.

De préférence, le(s) polyol(s) utilisable(s) dans le composant -OH est (sont) linéaire(s) ou ramifié(s), saturé(s) ou insaturé(s).

De préférence, le(s) polyol(s) utilisable(s) dans le composant -OH est (sont) de préférence choisi(s) parmi :
- les diols utilisables pour préparer le prépolymère de polyuréthane à terminaisons NCO A) utilisé selon l'invention et en particulier les polyéthers diols et les polyesters diols tels que décrits précédemment,
- les polyéthers triols et les polyalkylène triols, tels que les polyoxyalkylène triols et les polyalkylène triols, dont la partie alkylène (saturée), de préférence linéaire ou ramifiée, comprend de 2 à 4 atomes de carbone, et plus préférentiellement de 2 à 3 atomes de carbone,
- les polyesters triols d'origine naturelle tels que l'huile de ricin, et
- leurs mélanges.

L'huile de ricin est une huile végétale qui est obtenue à partir des graines de ricin, et est constituée de triglycérides (triples esters de glycérol et d'acides gras), lesdits acides gras comprenant pour environ 90% en poids un acide gras en C18, mono-insaturé et hydroxylé : l'acide ricinoléique.

A titre de prépolymères de polyuréthane à terminaisons OH (porteurs de groupements terminaux hydroxyle) utilisables dans le composant -OH, on peut utiliser ceux obtenus par réaction de polyaddition d'au moins un diol(s) avec au moins un diisoyanate(s), dans un excès stoechiométrique en diol(s) par rapport au(x) diisocyanate(s) conduisant à la fonctionnalisation complète des groupes isocyanate (NCO) par les groupes hydroxyles (OH). Selon un mode de réalisation, le prépolymère de polyuréthane à terminaisons OH est préparé in situ dans le composant OH par mélange de diisocyanate(s) et diol(s) dans des proportions adaptées conduisant à la fonctionnalisation complète des groupes isocyanate (NCO) par les groupes hydroxyles (OH).

De préférence, la quantité de polyol(s) utilisé(s) dans le composant -OH est telle que la teneur en groupes OH du composant -OH va de 250 à 430 méq OH/100g, et préférentiellement de 280 à 400 méq OH/100 g de composant OH, et mieux encore de 300 à 380 méq OH/100 g de composant OH.

De préférence, le polyol du composant -OH est choisi dans le groupe constitué des polyéther diols tels que par exemple des polyoxyalkylènes diols dont la partie alkylène saturée, de préférence linéaire ou ramifiée, comprend de 2 à 4 atomes de carbone, et plus préférentiellement de 2 à 3 atomes de carbone; des polyester diols ; des polyéther triols tels que par exemple des polyoxyalkylènes triols dont la partie alkylène saturée, de préférence linéaire ou ramifiée, comprend de 2 à 4 atomes de carbone, et plus préférentiellement de 2 à 3 atomes de carbone ; des polyalkylène triols, de préférence des polyalkylène triols dont la partie alkylène saturée, de préférence linéaire ou ramifiée, comprend de 2 à 4 atomes de carbone, et plus préférentiellement de 2 à 3 atomes de carbone ; des polyester triols, en particulier d'origine naturelle tels que par exemple l'huile de ricin ; et de leurs mélanges.

Selon un mode de réalisation préféré, le composant -OH comprend :
- au moins un polyéther triol, au moins un polyéther diol, et au moins un polyester diol (de préférence un mélange de polyester diols) ;
- au moins un polyester triol de préférence d'origine naturelle, tel que l'huile de ricin, et au moins un polyéther triol ;
- au moins un polyéther triol et au moins un polyester diol ;
- au moins un polyéther triol, au moins un polyéther diol, et au moins un polyester diol ;
- au moins un polyéther triol et au moins un polyester triol ;
- au moins un polyester triol de préférence d'origine naturelle, au moins un polyéther diol, et au moins un polyester diol ;
le(s) polyéther diol(s) étant de préférence choisi(s) parmi les polyoxyalkylènes diols dont la partie alkylène (saturée), de préférence linéaire ou ramifiée, comprend de 2 à 4 atomes de carbone, et plus préférentiellement de 2 à 3 atomes de carbone ; et
le(s) polyéther triol(s) étant de préférence choisi(s) parmi les polyoxyalkylènes triols, dont la partie alkylène (saturée), de préférence linéaire ou ramifiée, comprend de 2 à 4 atomes de carbone, et plus préférentiellement de 2 à 3 atomes de carbone.

La composition adhésive bicomposante à base de polyuréthane selon l'invention, peut être telle que le composant -NCO peut être obtenu à partir de tout diol (ou combinaison de diols) tel que défini ci-dessus, et que le composant -OH peut comprendre tout type de polyol (ou combinaison de polyols) tel que défini ci-dessus, à condition que :
- au moins un des polyols ou diols soit choisi parmi les polyéther polyols (ou polyéther diols),
- au moins un des polyols ou diols soit choisi parmi les polyester polyols (ou polyester diols), et
- le rapport pondéral de la quantité de polyéther polyol(s) sur la quantité de polyester polyol(s), noté r₄, aille de 0,6 à 2,2, préférentiellement de 0,7 à 2,0.

Selon un mode de réalisation, la composition adhésive bicomposante selon l'invention est telle que :
- le composant -NCO est une composition comprenant :
   A) au moins un prépolymère de polyuréthane comportant au moins deux groupements terminaux NCO, ledit prépolymère étant obtenu par réaction de polyaddition :
      - d'au moins un monomère diisocyanate dissymétrique tel que défini ci-dessus ; et
      - d'au moins un diol choisi parmi les polyéther diols, les polyester diols, et leurs mélanges, de préférence d'un mélange de polyéther diol(s) et de polyester diol(s), le(s) polyéther diol(s) étant de préférence choisi(s) parmi les polyoxyalkylène-diols, dont la partie alkylène (saturée), linéaire ou ramifiée, comprend de 2 à 4 atomes de carbone, et de préférence de 2 à 3 atomes de carbone ;
   B) au moins un triisocyanate choisi parmi les isocyanurates, les biurets, les adduits de diisocyanates et de triols, et leurs mélanges,
- le composant -OH est une composition comprenant au moins un polyol choisi parmi les diols, les triols, et leurs mélanges.

De préférence, la composition adhésive bicomposante selon l'invention est telle que :
- le composant -NCO est une composition comprenant :
   A) au moins un prépolymère de polyuréthane comportant au moins deux groupements terminaux NCO, ledit prépolymère étant obtenu par réaction de polyaddition :
      - d'au moins un monomère diisocyanate dissymétrique tel que défini précédemment ; et
      - d'au moins un diol choisi parmi les polyéther diols, les polyester diols, et leurs mélanges, de préférence d'un mélange de polyéther diol(s) et de polyester diol(s), le(s) polyéther diol(s) étant de préférence choisi(s) parmi les polyoxyalkylène-diols, dont la partie alkylène (saturée), linéaire ou ramifiée, comprend de 2 à 4 atomes de carbone, et de préférence de 2 à 3 atomes de carbone ;
   B) au moins un triisocyanate choisi parmi les isocyanurates, les biurets, les adduits de diisocyanates et de triols, et leurs mélanges,
      - le composant -OH est une composition comprenant au moins un polyol choisi parmi les polyéthers polyols, les polyester polyols, les prépolymères de polyuréthane comportant au moins deux groupes OH, et leurs mélanges, et de préférence parmi les polyéthers polyols, les polyester polyols, et leurs mélanges.

De préférence, la composition adhésive bicomposante selon l'invention est telle que :
- le composant -NCO est une composition comprenant :
   A) au moins un prépolymère de polyuréthane comportant au moins deux groupements terminaux NCO, ledit prépolymère étant obtenu par réaction de polyaddition :
      - d'au moins un monomère diisocyanate dissymétrique tel que défini précédemment ; et
      - d'au moins un diol choisi parmi les polyéther diols, les polyester diols, et leurs mélanges, de préférence d'un mélange de polyéther diol(s) et de polyester diol(s), le(s) polyéther diol(s) étant de préférence choisi(s) parmi les polyoxyalkylène-diols, dont la partie alkylène (saturée), linéaire ou ramifiée, comprend de 2 à 4 atomes de carbone, et de préférence de 2 à 3 atomes de carbone ;
   B) au moins un triisocyanate choisi parmi les isocyanurates, les biurets, les adduits de diisocyanates et de triols, et leurs mélanges,
- le composant -OH est une composition comprenant au moins un polyol choisi parmi les polyéthers diols ; les polyesters diols ; les polyéthers triols tels que par exemple les polyoxyalkylènes triols dont la partie alkylène (saturée), de préférence linéaire ou ramifiée, comprend de 2 à 4 atomes de carbone, et plus préférentiellement de 2 à 3 atomes de carbone ; les polyalkylène triols, de préférence les polyalkylène triols dont la partie alkylène (saturée), de préférence linéaire ou ramifiée, comprend de 2 à 4 atomes de carbone, et plus préférentiellement de 2 à 3 atomes de carbone ; les polyesters triols de préférence d'origine naturelle tels que par exemple l'huile de ricin ; et leurs mélanges.

De préférence, la composition adhésive bicomposante selon l'invention est telle que :
- le composant -NCO est une composition comprenant :
   A) au moins un prépolymère de polyuréthane comportant au moins deux groupements terminaux NCO, ledit prépolymère étant obtenu par réaction de polyaddition :
      - d'au moins un monomère diisocyanate dissymétrique tel que défini précédemment ; et
      - d'un mélange de polyéther diol(s) et de polyester diol(s), le(s) polyéther diol(s) étant de préférence choisi(s) parmi les polyoxyalkylène-diols, dont la partie alkylène (saturée), linéaire ou ramifiée, comprend de 2 à 4 atomes de carbone, et de préférence de 2 à 3 atomes de carbone ;
   B) au moins un triisocyanate choisi parmi les isocyanurates, les biurets, les adduits de diisocyanates et de triols, et leurs mélanges,
- le composant -OH est une composition comprenant un mélange de polyéther triol(s), de polyéther diol(s), et de polyester diol(s).

De préférence, la composition adhésive bicomposante selon l'invention est telle que :
- le composant -NCO est une composition comprenant :
   A) au moins un prépolymère de polyuréthane comportant au moins deux groupements terminaux NCO, ledit prépolymère étant obtenu par réaction de polyaddition :
      - d'au moins un monomère diisocyanate dissymétrique tel que défini ci-dessus ; et
      - d'un mélange de polyester diols,
   B) au moins un triisocyanate choisi parmi les isocyanurates, les biurets, les adduits de diisocyanates et de triols, et leurs mélanges,
- le composant -OH est une composition comprenant un mélange de polyester triol(s) (de préférence d'origine naturelle), de polyéther diol(s), et de polyester diol(s).

De préférence, la composition adhésive bicomposante selon l'invention est telle que :
- le composant -NCO est une composition comprenant :
   A) au moins un prépolymère de polyuréthane comportant au moins deux groupements terminaux NCO, ledit prépolymère étant obtenu par réaction de polyaddition :
      - d'au moins un monomère diisocyanate dissymétrique tel que défini précédemment : et
      - d'un mélange de polyéther diol(s) et de polyester diol(s), le(s) polyéther diol(s) étant de préférence choisi(s) parmi les polyoxyalkylène-diols, dont la partie alkylène (saturée), linéaire ou ramifiée, comprend de 2 à 4 atomes de carbone, et de préférence de 2 à 3 atomes de carbone ;
   B) au moins un triisocyanate choisi parmi les isocyanurates, les biurets, les adduits de diisocyanates et de triols, et leurs mélanges,
- le composant -OH est une composition comprenant un mélange de polyester triol(s), et de polyéther triol(s).

De préférence, la composition adhésive bicomposante selon l'invention est telle que :
- le composant -NCO est une composition comprenant :
   A) au moins un prépolymère de polyuréthane comportant au moins deux groupements terminaux NCO, ledit prépolymère étant obtenu par réaction de polyaddition :
      - d'au moins un monomère diisocyanate dissymétrique et
      - d'un mélange de polyéther diol(s) et de polyester diol(s), le(s) polyéther diol(s) étant de préférence choisi(s) parmi les polyoxyalkylène-diols, dont la partie alkylène (saturée), linéaire ou ramifiée, comprend de 2 à 4 atomes de carbone, et de préférence de 2 à 3 atomes de carbone ;
   B) au moins un triisocyanate choisi parmi les isocyanurates, les biurets, les adduits de diisocyanates et de triols, et leurs mélanges,
- le composant -OH est une composition comprenant un mélange de polyéther triol(s), de polyester diol(s), et éventuellement de polyéther diol(s).

De préférence, la composition adhésive bicomposante selon l'invention est telle que :
- le composant -NCO est une composition comprenant :
   A) au moins un prépolymère de polyuréthane comportant au moins deux groupements terminaux NCO, ledit prépolymère étant obtenu par réaction de polyaddition :
      - d'au moins un monomère diisocyanate dissymétrique et
      - d'un mélange de polyester diol(s);
   B) au moins un triisocyanate choisi parmi les isocyanurates, les biurets, les adduits de diisocyanates et de triols, et leurs mélanges,
- le composant -OH est une composition comprenant un mélange de polyester triol(s) (de préférence d'origine naturelle), de polyéther diol(s), et de polyester diol(s).

De préférence, les composants -NCO et -OH sont mélangés dans des quantités telle que le rapport r₃ va de 1 à 2,5, plus préférentiellement de 1,2 à 1,9.

De préférence, le mélange des composants -NCO et -OH est tel qu'il permet d'obtenir une composition présentant une viscosité mesurée à 60°C comprise dans le domaine allant de 500 à 2000 mPa.s, et plus préférentiellement de 1000 à 2000 mPa.s, permettant son application à l'aide d'un procédé de complexage conventionnel à une température inférieure ou égale à 60°C.

Plus préférentiellement, la composition adhésive obtenue après mélange des composants -NCO et -OH présente une viscosité mesurée à 50°C comprise dans le domaine allant de 500 à 2000 mPa.s, et plus préférentiellement de 1000 à 2000 mPa.s, permettant son application à une température allant de 40°C à 50°C.

La composition adhésive bicomposante selon l'invention peut comprendre en outre d'autres ingrédients tel qu'un aminosilane, pouvant être compris dans le composant -NCO et/ou dans le composant -OH.

L'utilisation d'aminosilane confère à l'adhésif une meilleure résistance à la délamination à chaud particulièrement utile lorsqu'on souhaite fabriquer des laminés devant subir un traitement de pasteurisation ou de stérilisation.

La concentration totale en aminosilane dans la composition adhésive bicomposant selon l'invention va de préférence de 0,5 à 2% en poids par rapport au poids total de la composition adhésive.

De préférence, la composition adhésive bicomposante selon l'invention est exempte ou substantiellement exempte de solvant. Plus préférentiellement, elle est sans solvant.

### Structure multicouche

La composition adhésive selon l'invention peut être utilisée pour fabriquer une structure multicouche telle que décrite ci-après. Ainsi, l'invention a également pour objet une structure multicouche comprenant au moins deux couches de matériau liées entre elles par une couche adhésive, caractérisé en ce que ladite couche adhésive est constituée par une composition adhésive selon l'invention à l'état réticulé.

La couche adhésive est obtenue par réticulation de la composition adhésive (ou mélange adhésif) obtenue par mélange des composants -NCO et -OH, à raison d'une quantité de préférence inférieure ou égale à 5 g/m², plus préférentiellement allant de 1,4 à 3 g/m², et mieux encore allant de 2 à 2,5 g/m².

Les couches de matériau entourant la couche adhésive sont généralement constituées d'un ou plusieurs matériaux habituellement utilisés pour fabriquer des emballages flexibles.

A titre de matériau utilisables, on peut citer le papier, un métal, comme par exemple l'aluminium, et les polymères thermoplastiques, ces derniers pouvant par ailleurs être métallisés ou enduits de substance(s) particulière(s) (par exemple à base d'oxyde de silicium ou d'oxyde d'aluminium) pour conférer des propriétés additionnelles (par exemple de barrière à l'humidité, aux gaz (O₂, N₂, CO₂, et leurs mélanges) et/ou à la lumière et aux rayons ultra-violet (UV)) au polymère thermoplastique.

A titre de polymères thermoplastiques utilisables, on peut citer par exemple :
- le polyéthylène (PE),
- le polypropylène (PP),
- un copolymère à base d'éthylène et de propylène,
- le polyamide (PA), orienté ou non,
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polychlorure de vinylidène (PVDC),
- le polyfluorure de vinylidène (PVDF),
- un polymère ou copolymère d'acide lactique (PLA), ou
- un polyhydroxyalkanoate (PHA).

Les films en PET ou PP peuvent notamment être métallisés (par de l'aluminium). La préparation de ces films de polymère thermoplastique métallisés est bien connue par l'homme du métier et permet de revêtir de manière homogène au moins une des surfaces dudit film d'une couche de particules métalliques (aluminium), en général de quelques nanomètres d'épaisseur.

Les couches de matériau entourant la couche adhésive peuvent en outre comprendre un ou plusieurs additifs afin de leurs conférer des propriétés additionnelles. A titre d'additifs utilisables, on peut citer par exemple des agents glissants et des agents antibuée.

Selon un mode de réalisation préféré, l'invention concerne une structure multicouche comprenant au moins deux couches de matériau liées entre elles par au moins une couche adhésive, caractérisé en ce que :
- ladite couche adhésive est constituée par une composition adhésive selon l'invention obtenue après mélange de ses composants à l'état réticulé, à raison d'une quantité inférieure à 5 g/m², et
- lesdites couches de matériau étant constituées de préférence d'un ou plusieurs matériaux choisis indépendamment l'un de l'autre parmi le polyamide orienté (OPA), le PE, le PP, le PET, le PET métallisé, et l'aluminium.

Après réticulation, le joint adhésif (constitué par la couche de colle réticulée) assure un niveau de cohésion satisfaisant entre les deux couches de matériau, qui est avantageusement maintenu après une exposition brève ou prolongée dudit joint adhésif à température élevée, ce qui permet de fabriquer d'une part, des structures multicouche thermoscellables, c'est-à-dire pouvant notamment être soumises à une température supérieure ou égale à 200°C pendant une seconde environ, et d'autre part, des structures multicouche stérilisables ou pasteurisables, c'est-à-dire pouvant être exposée à des températures allant de 100°C à 135°C, ou encore allant de 70°C à moins de 100°C (par exemple de 70°C à 99°C), respectivement, pendant une durée suffisante pour assurer la stérilisation ou la pasteurisation de la structure multicouche et le cas échéant du contenu conditionné dans ladite structure. Cette durée peut varier dans une large mesure selon la nature du contenu conditionné (par exemple aliment). De préférence, cette durée est d'au moins 15 minutes. Plus préférentiellement, cette durée va de 15 minutes à 2 heures.

Selon un mode de réalisation plus préféré, l'invention concerne une structure multicouche comprenant une première couche de matériau métallique et une deuxième couche de matériau, identique ou différente de la première, et liées entre elles au niveau de la surface métallique de ladite couche de matériau métallique par au moins une couche adhésive, caractérisé en ce que :
- ladite couche adhésive est constituée par une composition adhésive selon l'invention obtenue après mélange de ses composants à l'état réticulé, à raison d'une quantité inférieure à 5 g/m².

La couche de matériau métallique peut être une feuille d'aluminium ou un film en polymère thermoplastique métallisé sur au moins l'une de ses surfaces et de préférence sur une seule surface (par de l'aluminium).

L'épaisseur de chacune des deux couches de matériau adjacentes à la couche adhésive et des autres couches éventuellement mises en œuvre dans la structure multicouche selon l'invention est susceptible de varier dans un large domaine allant de 5 à 150 µm. L'épaisseur totale de la structure multicouche est susceptible de varier également dans un large domaine allant de 20 à 400 µm.

De préférence, la structure multicouche se présente sous la forme d'un film multicouche.

### Procédé de fabrication d'une structure multicouche

L'invention a également pour objet un procédé de fabrication d'une structure multicouche selon l'invention, comprenant les étapes suivantes :
(i) le mélange des composants -NCO et -OH à une température appropriée, de préférence à une température inférieure ou égale à 60°C, plus préférentiellement inférieure ou égale à 50°C, puis
(ii) l'enduction dudit mélange sur la surface d'une première couche de matériau, puis
(iii) le contrecollage de la surface d'une deuxième couche de matériau sur ladite surface enduite, puis
(iv) la réticulation dudit mélange.

De préférence, les composants -NCO et -OH sont mélangés dans des quantités telle que le rapport r₃ va de 1 à 2,5, plus préférentiellement de 1,4 à 2, et mieux encore de 1,5 à 1,9.

L'enduction dudit mélange peut être réalisée sur tout ou partie de la surface d'un matériau.

De préférence, le mélange adhésif est enduit à raison d'une quantité de préférence inférieure ou égale à 5 g/m², plus préférentiellement allant de 1,4 à 3 g/m², et mieux encore allant de 2 à 2,5 g/m².

En particulier, l'enduction dudit mélange peut être réalisée sous la forme d'une couche d'épaisseur allant de 1,5 à 5 µm. L'enduction est réalisée de préférence de manière continue ou substantiellement continue.

Eventuellement, la réticulation dudit mélange sur la surface du matériau peut-être accélérée en chauffant le(s) matériau(x) enduit(s) à une température inférieure ou égale à 70°C.

L'enduction et le contrecollage du second matériau sont généralement effectués dans un intervalle de temps compatible avec le procédé d'enduction, comme il est bien connu de l'homme du métier, c'est-à-dire avant que la couche d'adhésif perde sa capacité à fixer par collage les deux matériaux.

### Utilisation d'une structure multicouche

L'invention a également pour objet l'utilisation d'une structure multicouche selon l'invention pour la fabrication d'emballages flexibles, et en particulier d'emballages flexibles, thermoscellables, stérilisables et/ou pasteurisables.

Les complexes selon l'invention peuvent en effet être traités thermiquement sans perte substantielle du niveau de cohésion entre les couches de matériau liées par une couche adhésive selon l'invention.

L'invention est à présent décrite dans les exemples de réalisation suivants qui sont donnés à titre purement illustratif, et ne sauraient être interprétés pour en limiter la portée.

### Exemples : Compositions adhésives bicomposantes :

Les compositions adhésives bicomposantes des exemples 1 à 11 ont été préparées de la même manière en suivant le protocole opératoire décrit ci-dessous. La nature et les quantités des ingrédients utilisés sont indiqués dans le tableau 1. Les quantités des ingrédients dans le tableau 1 sont exprimées en % en poids de produit commercial par rapport au poids de composant -NCO ou poids du composant -OH selon le cas.

Les ingrédients suivants ont été utilisés :
- Scuranate® T100 commercialisé par la société Vencorex et correspondant à un mélange d'isomères de TDI comprenant au moins 99% en poids d'isomère 2,4-TDI titrant en moyenne à 48,1% en poids en groupe NCO par rapport au poids dudit produit commercial,
- Isonate® M125 commercialisé par la société Dow et correspondant à un mélange d'isomères de MDI comprenant 97% en poids environ d'isomère 4,4'-MDI et 3% en poids environ de 2,4'-MDI, titrant en moyenne à 33,6% en poids en groupe NCO par rapport au poids dudit produit commercial,
- Desmodur® N3300 commercialisé par la société Covestro et correspondant à un trimère de HDI titrant en moyenne à 21,8% en poids en groupe NCO par rapport au poids dudit produit commercial,
- Silquest® A1100 commercialisée par la société Momentive et correspondant à un gamma-aminopropyltriéthoxysilane ayant une masse molaire égale à 179,29 g/mol,
- Voranol® P400 commercialisé par la société Dow et correspondant à un polyéther diol (polyoxypropylène diol obtenu à partir de propylène glycol et d'oxyde de propylène) dont l'indice hydroxyle est de 260 mg KOH/g environ,
- Voranol® CP450 commercialisée par la société Dow et correspondant à un polyéther triol (polyoxypropylène triol obtenu à partir de glycérol et d'oxyde de propylène) dont l'indice hydroxyle est de 383 mg KOH/g environ,
- Voranol® 1010L commercialisé par la société Dow et correspondant à un polyéther diol (polyoxypropylène diol obtenu à partir de propylène glycol et d'oxyde de propylène) dont l'indice hydroxyle est de 110 mg KOH/g environ,
- Voranol® 2000L commercialisé par la société Dow et correspondant à un polyéther diol (polyoxypropylène diol obtenu à partir de propylène glycol et d'oxyde de propylène) dont l'indice hydroxyle est de 56 mg KOH/g environ,
- Diéthylène glycol (DEG) ayant une masse molaire égale à 106,15 g/mol, dont l'indice hydroxyle est de 1057 mg KOH/g environ,
- Dipropylène glycol (DPG) ayant une masse molaire égale à 134,17 g/mol, dont l'indice hydroxyle est de 836 mg KOH/g environ,
- Dekatol® 109 fabriqué par la société Bostik et correspondant à un polyester diol obtenu selon le procédé de polycondensation tel que décrit dans la présente demande et dont l'indice hydroxyle est de 95 mg KOH/g environ,
- Dekatol® 1105 fabriqué par la société Bostik et correspondant à un polyester diol obtenu selon le procédé de polycondensation tel que décrit dans la présente demande et dont l'indice hydroxyle est de 97,5 mg KOH/g environ,
- Realkyd® XTR 10410 commercialisé par la société Arkema et correspondant à un polyester diol obtenu selon le procédé de polycondensation tel que décrit dans la présente demande et dont l'indice hydroxyle est de 112 mg KOH/g environ,
- Realkyd® XTR 09432 commercialisé par la société Arkema et correspondant à un polyester diol obtenu selon le procédé de polycondensation tel que décrit dans la présente demande et dont l'indice hydroxyle est de 138 mg KOH/g environ.
- Huile de ricin ayant un IOH égal à 164 mg KOH/g environ ;
- CAPA™ 2043 commercialisé par la société Perstorp et correspondant à un polyester diol obtenu par polymérisation par ouverture de cycle de caprolactone et dont l'indice d'hydroxyle est de 280 mg KOH/g environ.

### 1.1. Préparation du composant -NCO :

### Préparation du prépolymère de polyuréthane (PU) à terminaisons NCO :

Les prépolymères de PU à terminaisons NCO utilisés dans les exemples 1 à 10 ont été préparés de la même manière à l'aide des différents ingrédients figurant dans le tableau 1. Les quantités de diisocyanate(s) et de diol(s) utilisés (exprimées en % en poids de produit commercial par rapport au poids de composant -NCO) correspondent à un ratio molaire NCO/OH (r1) de allant de 1,5 à 2,5 environ tel qu'indiqué dans le tableau 2.

Le(s) diisocyanate(s) et le(s) diol(s) sont mélangés dans un réacteur maintenu sous agitation constante et sous azote, à une température T1 allant de 72°C à 80°C. La température est contrôlée de manière à ne pas dépasser 80°C.

L'ensemble est maintenu en mélange à cette température jusqu'à la consommation complète des fonctions hydroxyle des diols.

Le taux d'avancement de la réaction est contrôlé en mesurant la teneur en groupe NCO par un dosage de dibutylamine en retour, à l'aide d'acide chlorhydrique selon la norme NF T52-132. La réaction est stoppée lorsque la teneur en groupe NCO mesurée est environ égal à la teneur en groupe NCO souhaitée.

### Préparation du composant -NCO par mélange de ses ingrédients :

Dans le même réacteur maintenu sous agitation constante et sous azote, le prépolymère de polyuréthane à terminaisons NCO obtenu est ensuite mélangé aux autres ingrédients constituant le composant -NCO, à savoir un isocyanurate de HDI et un promoteur d'adhérence aminosilane dans les proportions indiquées dans le tableau 1.

Après homogénéisation du mélange (30 minutes), on mesure la teneur en groupe NCO et la teneur pondérale en monomère diisocyanate, dans le composant -NCO respectivement.

La teneur en groupe NCO dans le composant -NCO, exprimée en pourcentage en poids par rapport au poids du composant -NCO (%NCO), est mesurée selon la norme NF T52-132. Cette teneur est ensuite exprimée en milliéquivalent de groupes NCO présents dans 100 g de composant -NCO (méq NCO/100g) et consignée dans le tableau 2 ci-dessous.

La teneur pondérale en monomère diisocyanate est mesurée par une méthode d'HPLC munie d'un détecteur UV tel que décrit précédemment (phase inversée en C18, phase mobile : solution aqueuse d'acétonitrile, tamponnée avec une solution aqueuse à 0,2% en poids de bisulfate de tétrabutylammonium à pH égal à 2,5, longueur d'onde de détection : 254nm).

Pour l'ensemble des exemples, la teneur pondérale en monomère diisocyanate présente dans le composant -NCO est inférieure ou égale à 0,1% en poids du poids dudit composant.

Les résultats de ces mesures sont consignés dans le tableau 2 ci-dessous.

### 1.2. Préparation du composant -OH :

Dans un réacteur maintenu sous agitation constante et sous azote, les différents ingrédients constituant le composant -OH sont mélangés dans les proportions indiquées dans le tableau 1 à une température allant de 40°C à 50°C.

Après homogénéisation du mélange (1 heure environ), on mesure la teneur en groupe OH dans le composant -OH, exprimée en milligramme de KOH par gramme de composant - OH (mg KOH/g). Cette teneur est ensuite exprimée en milliéquivalent de groupes OH présents dans 100 g de composant -OH (méq OH/100g) et consignée dans le tableau 2 ci-dessous.

### 1.3. Préparation de la composition adhésive :

Le composant -NCO préparé au paragraphe 1.1. et le composant -OH préparé au paragraphe 1.2. sont mélangés, compte tenu de leur teneur respective en groupe NCO et groupe OH, selon un rapport pondéral donné permettant d'atteindre un rapport molaire NCO/OH (r₃) donné. Ces rapports sont indiqués dans le tableau 2.

Le mélange est effectué via une unité de mélange et un mélangeur statique puis introduit entre les rouleaux doseurs de complexage décrite au point 1.4. ci-après à une température de 50°C environ.

Le mélange est maintenu à la température indiquée dans le tableau 3 correspondant à la température d'application du mélange et pour laquelle le mélange présente une viscosité allant de 1000 à 2000 mPa.s.

### 1.4. Préparation des structures multicouches A, B et C:

Le mélange obtenu au paragraphe 1.3. est utilisé pour la fabrication :
- d'une structure bicouche A dont la première couche est constituée d'un film de polyamide orienté (OPA) d'épaisseur 15 µm et la deuxième couche d'un film de polyéthylène (PE) d'épaisseur 50 µm ; et
- d'une structure bicouche B dont la première couche est constituée d'un film de PolyEthylèneTéréphtalate (PET) métallisé (aluminium) d'épaisseur 12µm et la deuxième couche d'un film de PE d'épaisseur 50 µm,
- d'une structure tricouche C dont la première couche est constituée d'un film de PET d'épaisseur 12 µm, la deuxième couche d'une feuille d'aluminium d'épaisseur 7 µm, et la troisième couche d'un film de PE d'épaisseur 50 µm.

On utilise pour cela une machine de complexage de type Nordmeccanica pourvu d'un dispositif d'enduction de type rouleau fonctionnant à une température de 50°C et à une vitesse de défilement de 50 mètre par minute ; la couche adhésive est appliquée entre chacune des couches individuelles de matériau des bicouches et tricouches sus-décrits en une couche ayant une épaisseur d'environ 2 µm correspondant à une application d'environ 2,5 gramme de colle par mètre carré de film. Dans le cas de la structure bicouche B, la couche adhésive relie la surface métallisée du film de PET métallisé à une surface du film de PE.

### 1.5. Mesure de la cohésion des structures multicouche A, B, C, à température ambiante (23°C) avant pasteurisation:

Afin de compléter la réticulation de la couche adhésive, une structure multicouche obtenue au paragrahe 1.4. est placée de 7 à 30 jours dans une enceinte climatique maintenue à une température de 23 °C et une humidité relative de 50 %.

Ladite structure multicouche est ensuite soumise au test de pelage à 180° conformément au paragraphe 1.7.

### 1.6. Résistance à la pasteurisation de la structure bicouche A :

On place une structure multicouche A obtenue au paragrahe 1.4 dans un autoclave à 90°C en phase vapeur durant une heure afin de la pasteuriser, et l'on procède immédiatement après sortie de l'étuve à un test de pelage à 180°.

On estime que la structure multicouche présente une résistance à la pasteurisation satisfaisante, lorsque le niveau de cohésion mesuré avant et après pasteurisation (respectivement aux paragraphes 1.5 et 1.6) est sensiblement égal. En particulier, cela se traduit par un écart de la valeur obtenue au test de pelage à 180° après pasteurisation inférieur ou égal à 30% de la valeur mesurée avant pasteurisation.

On a observé pour l'ensemble des compositions adhésives testées que le complexe A présente une résistance à la pasteurisation satisfaisante.

### 1.7. Description du test de pelage à 180° d'une structure bicouche :

La cohésion du complexe est évaluée par le test de pelage à 180° tel que décrit dans la norme française NF T 54-122. Le principe de ce test consiste en la détermination de la force nécessaire à la séparation (ou pelage) de deux couches individuelles de matériau liées par l'adhésif.

Une éprouvette de forme rectangulaire de 15 mm de large et d'environ 10 cm de long est découpée dans le complexe. On décolle manuellement à partir de l'extrémité de cette éprouvette, et sur environ 2 cm, les deux couches individuelles de matériau comprises dans cette bande et les deux extrémités libres ainsi obtenues sont fixées sur deux dispositifs d'attache reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des deux couches dont les extrémités décollées se déplacent progressivement selon un axe vertical en formant un angle de 180°, la partie fixe -reliée à un dynamomètre- mesure la force supportée par l'éprouvette ainsi maintenue, et mesurée en Newton.

### 1.8. Description du test de pelage à 180° d'une structure tricouche :

La cohésion du complexe est évaluée de la même façon que pour une structure bicouche au niveau de l'interface entre la couche de PET et la couche composite constituée des couches individuelles d'aluminium (Al) et de PE. On mesure la force nécessaire à la séparation (ou pelage) de la couche de PET et de la couche (Aluminium-PE).

On réalise le même test au niveau de l'interface entre la couche composite constituée des couches individuelles de PET et d'aluminium (PET-Aluminium) et la couche de PE.

De manière générale, on estime que le niveau de cohésion de la couche d'un adhésif est satisfaisant lorsque la valeur obtenue au test de pelage à 180° sur le complexe:
- formé de deux films thermoplastiques, est supérieure ou égale à 3 Newton (N).
- formé d'un film thermoplastique et d'une feuille métallique (en aluminium) est supérieure ou égale à 3 Newton (N).
- formé d'un film thermoplastique et d'un film thermoplastique métallisé (par de l'aluminium) est supérieure ou égale à 1 Newton (N).

Les résultats obtenus à l'égard des structures multicouches A, B et C sont rassemblés dans le tableau 3. La marque « Oui » signifie que le niveau de cohésion est satisfaisant. La marque « Non » signifie que le niveau de cohésion est insuffisant.

Ainsi, les structures multicouches des exemples 2 à 9 satisfaisant au test de pelage sus-décrit présentent un niveau de cohésion satisfaisant, c'est-à-dire supérieure ou égale au minimum requis pour fabriquer des emballages flexibles ou être utilisées en tant que telles comme emballages flexibles.

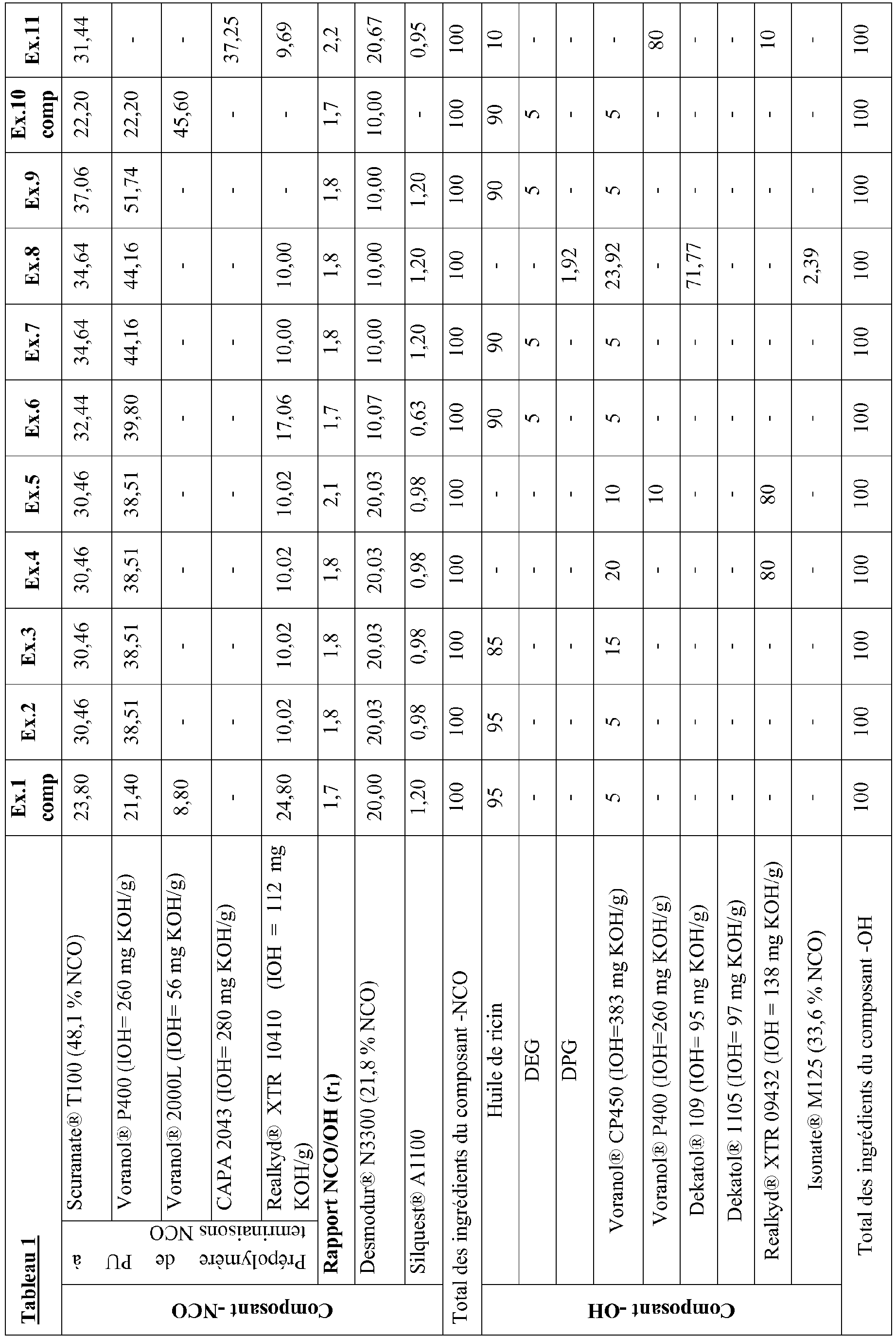

| **Tableau 2** | | **Ex.1 comp** | **Ex.2** | **Ex.3** | **Ex.4** | **Ex.5** | **Ex.6** | **Ex.7** | **Ex.8** | **Ex.9** | **Ex.10 comp** | **Ex.11** |
|---|---|---|---|---|---|---|---|---|---|---|---|---|
| **Composant -NCO** | Rapport molaire NCO diisocyanate / NCO triisocyanate (r₂) | 2,6 | 3,4 | 3,4 | 3,4 | 3,4 | 7,1 | 7,6 | 7,6 | 8,2 | 4,9 | 3,4 |
| | Teneur en groupe -NCO dans le composant -NCO (méq NCO /100g) | 212 | 249 | 249 | 249 | 249 | 202 | 217 | 217 | 230 | 158 | 259 |
| **Composant -OH** | Teneur en groupe -OH dans le composant -OH (méq OH/100g) | 312 | 312 | 351 | 333 | 315 | 391 | 391 | 321 | 391 | 391 | 418 |
| **Mélange des composants -NCO et -OH** | Rapport pondéral polyéther polyol / polyester polyol (r₄) | 0,5 | 0,7 | 0,9 | 0,9 | 1,0 | 1,0 | 1,2 | 1,3 | 1,8 | 5,1 | 0,6 |
| | Rapport pondéral de composant -NCO / composant -OH | 100/45 | 100/50 | 100/45 | 100/55 | 100/50 | 100/30 | 100/33 | 100/45 | 100/35 | 100/15 | 100/40 |
| | Rapport molaire NCO/OH (r₃) | 1,5 | 1,6 | 1,6 | 1,4 | 1,6 | 1,7 | 1,7 | 1,5 | 1,7 | 2,7 | 1,5 |
| | Température d'application du mélange | 50°C | 50°C | 50°C | 50°C | 50°C | 60°C | 60°C | 60° C | 60°C | 70°C | 50°C |

| **Tableau 3** | | | **Ex.1 comp** | **Ex.2** | **Ex.3** | **Ex.4** | **Ex.5** | **Ex.6** | **Ex.7** | **Ex.8** | **Ex.9** | **Ex.10 comp** | **Ex.11** |
|---|---|---|---|---|---|---|---|---|---|---|---|---|---|
| **Pelage à 180° avant pasteurisation (en N/15 mm)** | Bicouche A (≥ 3N/15mm) | OPA/PE | Oui | Oui | Oui | Oui | Oui | Oui | Oui | Oui | Oui | Oui | Oui |
| | Bicouche B (≥ 1N/15mm) | PETmét/PE | Non | Oui | Oui | Oui | Oui | Oui | Oui | Oui | Oui | Non | Oui |
| | Tricouche C (≥ 3N/15mm) | PET/Al | Non | Oui | Oui | Oui | Oui | Oui | Oui | Oui | Oui | Non | Oui |
| | | Al/PE | Non | Oui | Oui | Oui | Oui | Oui | Oui | Oui | Oui | Non | Oui |

## Revendications

1. Composition adhésive bicomposante à base de polyuréthane comprenant un composant -NCO et un composant -OH tels que :
- le composant -NCO est une composition comprenant :
A) au moins un prépolymère de polyuréthane comportant au moins deux groupements terminaux NCO obtenu par réaction de polyaddition :
- d'au moins un monomère diisocyanate dissymétrique et
- d'au moins un diol,
B) au moins un triisocyanate choisi parmi les isocyanurates, les biurets, les adduits de diisocyanates et de triols, et leurs mélanges,
- le composant -OH est une composition comprenant au moins un polyol,
- au moins un des polyols ou diols est choisi parmi les polyéther polyols (ou polyéther diols),
- au moins un des polyols ou diols est choisi parmi les polyester polyols (ou polyester diols), et
- le rapport pondéral de la quantité de polyéther polyol(s) sur la quantité de polyester polyol(s), noté r₄, va de 0,6 à 2,2.

2. Composition selon la revendication 1, telle que le monomère diisocyanate dissymétrique est choisi parmi :
- l'isophorone diisocyanate (IPDI),
- le 2,4-toluène diisocyanate (2,4-TDI) et sa forme hydrogénée,
- le 2,4'-diisocyanate de diphénylméthane (2,4'-MDI) et sa forme hydrogénée,
- et leurs mélanges.

3. Composition selon la revendication 1 ou 2, telle que le diol est choisi parmi les polyéther diol(s), les polyester diol(s), et leurs mélanges, le(s) polyéther diol(s) étant de préférence choisi(s) parmi les polyoxyalkylène-diols, dont la partie alkylène saturée, linéaire ou ramifiée, comprend de 2 à 4 atomes de carbone, et de préférence de 2 à 3 atomes de carbone, et le(s) polyester diol(s) étant de préférence ceux ayant un IOH allant de 90 à 281 mg KOH/g, préférentiellement de 90 à 150 mg KOH/g.

4. Composition selon la revendication 3, telle que le diol est un mélange de polyéther diol(s) et polyester diol(s).

5. Composition selon l'une quelconque des revendications 1 à 4, telle que la composition -OH comprend au moins un polyol choisi dans le groupe constitué des polyéther polyols, des polyester polyols, des prépolymères de polyuréthane comportant au moins deux groupes OH, et de leurs mélanges, de préférence le polyol est choisi dans le groupe constitué des polyéther polyols, des polyester polyols, et de leurs mélanges.

6. Composition selon la revendication 5, telle que le polyol est choisi dans le groupe constitué des polyéther diols tels que par exemple des polyoxyalkylènes diols dont la partie alkylène saturée, de préférence linéaire ou ramifiée, comprend de 2 à 4 atomes de carbone, et plus préférentiellement de 2 à 3 atomes de carbone; des polyester diols ; des polyéther triols tels que par exemple des polyoxyalkylènes triols dont la partie alkylène saturée, de préférence linéaire ou ramifiée, comprend de 2 à 4 atomes de carbone, et plus préférentiellement de 2 à 3 atomes de carbone ; des polyalkylène triols, de préférence des polyalkylène triols dont la partie alkylène saturée, de préférence linéaire ou ramifiée, comprend de 2 à 4 atomes de carbone, et plus préférentiellement de 2 à 3 atomes de carbone ; des polyester triols, en particulier d'origine naturelle tels que par exemple l'huile de ricin ; et de leurs mélanges.

7. Composition selon l'une quelconque des revendications précédentes, telle que la réaction de polyaddition a lieu en présence ou non d'au moins un catalyseur de réaction, à une température de réaction T1 inférieure à 95°C, dans des conditions anhydres, et dans des quantités de monomère(s) diisocyanate(s) et de diol(s) conduisant à un rapport molaire NCO/OH, noté r₁, allant de 1,5 à 2,5.

8. Composition selon l'une quelconque des revendications précédentes, telle que le triisocyanate est choisi parmi les isocyanurates de diisocyanate de formule générale (I) suivante : 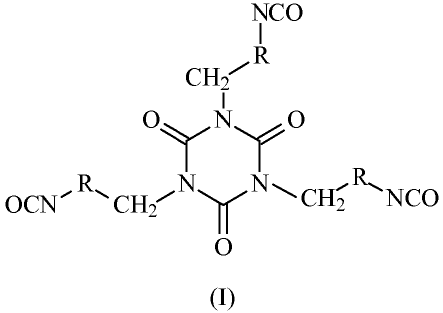 dans laquelle :
R représente un groupe alkylène, linéaire, ramifié ou cyclique, aliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.

9. Composition selon l'une quelconque des revendications précédentes, telle que le composant -NCO comprend une teneur en monomère(s) diisocyanate(s) aliphatique(s) inférieure ou égale à 0,5% en poids par rapport au poids du composant -NCO, et une teneur en monomère(s) diisocyanate(s) aromatique(s) inférieure ou égale à 0,1% en poids par rapport au poids du composant -NCO.

10. Composition selon l'une quelconque des revendications précédentes, telle que les composants -NCO et -OH sont dans des quantités telles que le rapport molaire NCO/OH noté r₃, va de 1 à 2,5.

11. Composition selon l'une quelconque des revendications précédentes, telle que le rapport molaire du nombre de groupes NCO présents dans la quantité totale de monomère(s) diisocyanate(s) utilisé(s) pour la synthèse du prépolymère de polyuréthane à terminaisons NCO A) sur le nombre de groupes NCO présents dans la quantité totale de triisocyanate(s) présent(s) dans le composant -NCO, noté r₂, va de 3 à 8,5.

12. Composition selon la revendication précédente, telle que le rapport r₂ va de 3 à 5.

13. Composition selon l'une quelconque des revendications précédentes, telle que la teneur en groupes NCO du composant -NCO va de 220 à 280 méq NCO pour 100g du composant -NCO.

14. Composition selon l'une quelconque des revendications précédentes, telle qu'elle ne comprend pas de solvant.

15. Structure multicouche comprenant au moins deux couches de matériau liées entre elles par une couche adhésive, **caractérisé en ce que** ladite couche adhésive est constituée par la composition adhésive telle que définie selon l'une quelconque des revendications précédentes obtenue par mélange des composants -NCO et -OH, à l'état réticulé.

16. Procédé de fabrication en continu d'une structure multicouche selon la revendication 15, comprenant les étapes suivantes :
(i) le mélange des composants -NCO et -OH à une température inférieure ou égale à 60°C, puis
(ii) l'enduction dudit mélange sur la surface d'une première couche de matériau, puis
(iii) le contrecollage de la surface d'une deuxième couche de matériau sur ladite surface enduite, puis
(iv) la réticulation dudit mélange.

17. Utilisation d'une structure multicouche telle que définie selon la revendication 15 pour la fabrication d'emballages flexibles thermoscellables, stérilisables et/ou pasteurisables

## Patentansprüche

1. Zweikomponentige Zusammensetzung auf Basis von Polyurethan, umfassend eine -NCO-Komponente und eine -OH-Komponente, wobei:
- die -NCO-Komponente eine Zusammensetzung ist, die
A) mindestens ein durch Polyadditionsreaktion von
- mindestens einem unsymmetrischen Diisocyanat-Monomer und
- mindestens einem Diol erhaltenes Polyurethan-Prepolymer mit mindestens zwei NCO-Endgruppen und
B) mindestens ein Triisocyanat, das aus Isocyanuraten, Biureten, Addukten von Diisocyanaten und Triolen und Mischungen davon ausgewählt ist,
umfasst,
- die -OH-Komponente eine Zusammensetzung ist, die mindestens ein Polyol umfasst,
- mindestens eines der Polyole bzw. Diole aus Polyetherpolyolen (bzw. Polyetherdiolen) ausgewählt ist,
- mindestens eines der Polyole bzw. Diole aus Polyesterpolyolen (bzw. Polyesterdiolen) ausgewählt ist und
- das als r₄ bezeichnete Gewichtsverhältnis der Menge an Polyetherpolyol(en) zur Menge an Polyesterpolyol(en) im Bereich von 0,6 bis 2,2 liegt.

2. Zusammensetzung nach Anspruch 1, wobei das unsymmetrische Diisocyanat-Monomer aus
- Isophorondiisocyanat (IPDI),
- 2,4-Toluoldiisocyanat (2,4-TDI) und seiner hydrierten Form,
- 2,4'-Diphenylmethandiisocyanat (2,4'-MDI) und seiner hydrierten Form
- und Mischungen davon
ausgewählt ist.

3. Zusammensetzung nach Anspruch 1 oder 2, wobei das Diol aus Polyetherdiol bzw. Polyetherdiolen, Polyesterdiol bzw. Polyesterdiolen und Mischungen davon ausgewählt ist, wobei das Polyetherdiol bzw. die Polyetherdiole vorzugsweise aus Polyoxyalkylendiolen, deren gesättigter, linearer oder verzweigter Alkylenteil 2 bis 4 Kohlenstoffatome und vorzugsweise 2 bis 3 Kohlenstoffatome umfasst, ausgewählt ist bzw. sind und es sich bei dem Polyesterdiol bzw. den Polyesterdiolen vorzugsweise um diejenigen mit einer OHZ im Bereich von 90 bis 281 mg KOH/g, vorzugsweise von 90 bis 150 mg KOH/g, handelt.

4. Zusammensetzung nach Anspruch 3, wobei es sich bei dem Diol um eine Mischung von Polyetherdiol bzw. Polyetherdiolen und Polyesterdiol bzw. Polyesterdiolen handelt.

5. Zusammensetzung nach einem der Ansprüche 1 bis 4, wobei die -OH-Zusammensetzung mindestens ein Polyol aus der Gruppe bestehend aus Polyetherpolyolen, Polyesterpolyolen, Polyurethan-Prepolymeren mit mindestens zwei OH-Gruppen und Mischungen davon ausgewählt ist, vorzugsweise das Polyol aus der Gruppe bestehend aus Polyetherpolyolen, Polyesterpolyolen und Mischungen davon ausgewählt ist.

6. Zusammensetzung nach Anspruch 5, wobei das Polyol aus der Gruppe bestehend aus Polyetherdiolen wie beispielsweise Polyoxyalkylendiolen, deren gesättigter, vorzugsweise linearer oder verzweigter Alkylenteil 2 bis 4 Kohlenstoffatome und weiter bevorzugt 2 bis 3 Kohlenstoffatome umfasst, Polyesterdiolen, Polyethertriolen wie beispielsweise Polyoxyalkylentriolen, deren gesättigter, vorzugsweise linearer oder verzweigter Alkylenteil 2 bis 4 Kohlenstoffatome und weiter bevorzugt 2 bis 3 Kohlenstoffatome umfasst, Polyalkylentriolen, vorzugsweise Polyalkylentriolen, deren gesättigter, vorzugsweise linearer oder verzweigter Alkylenteil 2 bis 4 Kohlenstoffatome und weiter bevorzugt 2 bis 3 Kohlenstoffatome umfasst, Polyestertriolen, insbesondere natürlicher Herkunft, wie beispielsweise Ricinusöl, und Mischungen davon ausgewählt ist.

7. Zusammensetzung nach einem der vorhergehenden Ansprüche, wobei die Polyadditionsreaktion in Anwesenheit oder Abwesenheit mindestens eines Reaktionskatalysators bei einer Reaktionstemperatur T1 von weniger als 95 °C unter wasserfreien Bedingungen und mit Mengen von Diisocyanat-Monomer(en) und Diol(en), die zu einem als r₁ bezeichneten NCO/OH-Molverhältnis im Bereich von 1,5 bis 2,5 führen, stattfindet.

8. Zusammensetzung nach einem der vorhergehenden Ansprüche, wobei das Triisocyanat aus den Diisocyanatisocyanuraten der folgenden allgemeinen Formel (I) ausgewählt ist: 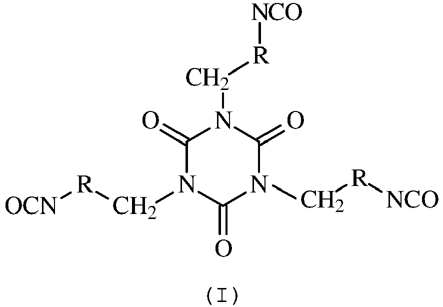 in der:
R für eine lineare, verzweigte oder cyclische, aliphatische oder aromatische Alkylengruppe mit 4 bis 9 Kohlenstoffatomen steht,
mit der Maßgabe, dass die NCO-Gruppen nicht über eine kovalente Bindung mit einem Kohlenstoffatom, das Teil eines aromatischen Kohlenwasserstoffrings wie einer Phenylgruppe ist, verknüpft sind.

9. Zusammensetzung nach einem der vorhergehenden Ansprüche, wobei die -NCO-Komponente einen Gehalt an aliphatischem Diisocyanat-Monomer bzw. aliphatischen Diisocyanat-Monomeren kleiner oder gleich 0,5 Gew.-%, bezogen auf das Gewicht der -NCO-Komponente, und einen Gehalt an aromatischem Diisocyanat-Monomer bzw. aromatischen Diisocyanat-Monomeren kleiner oder gleich 0,1 Gew.-%, bezogen auf das Gewicht der -NCO-Komponente, aufweist.

10. Zusammensetzung nach einem der vorhergehenden Ansprüche, wobei die -NCO- und -OH-Komponenten in solchen Mengen vorliegen, dass das als r₃ bezeichnete NCO/OH-Molverhältnis im Bereich von 1 bis 2,5 liegt.

11. Zusammensetzung nach einem der vorhergehenden Ansprüche, wobei das als r₂ bezeichnete Molverhältnis der Zahl von NCO-Gruppen in der Gesamtmenge des Diisocyanat-Monomers bzw. der Diisocyanat-Monomere, das bzw. die für die Synthese des Polyurethan-Prepolymers mit NCO-Endgruppen A) verwendet wird bzw. werden, zur Zahl von NCO-Gruppen in der Gesamtmenge von Triisocyanat bzw. Triisocyanaten in der -NCO-Komponente im Bereich von 3 bis 8,5 liegt.

12. Zusammensetzung nach dem vorhergehenden Anspruch, wobei das Verhältnis r₂ im Bereich von 3 bis 5 liegt.

13. Zusammensetzung nach einem der vorhergehenden Ansprüche, wobei der NCO-Gruppen-Gehalt der -NCO-Komponente im Bereich von 220 bis 280 meq NCO pro 100 g der -NCO-Komponente liegt.

14. Zusammensetzung nach einem der vorhergehenden Ansprüche, die kein Lösungsmittel umfasst.

15. Mehrschichtstruktur mit mindestens zwei Materialschichten, die durch eine Klebstoffschicht miteinander verbunden sind, **dadurch gekennzeichnet, dass** die Klebstoffschicht aus der durch Mischen der -NCO- und -OH-Komponenten erhaltenen Klebstoffzusammensetzung gemäß einem der vorhergehenden Ansprüche in vernetztem Zustand besteht.

16. Verfahren zur kontinuierlichen Herstellung einer Mehrschichtstruktur nach Anspruch 15, das die folgenden Schritte umfasst:
(i) Mischen der -NCO- und -OH-Komponenten bei einer Temperatur kleiner oder gleich 60 °C, dann
(ii) Beschichten der Oberfläche einer ersten Materialschicht mit der Mischung, dann
(iii) Auflaminieren der Oberfläche einer zweiten Materialschicht auf die beschichtete Oberfläche, dann
(iv) Vernetzen der Mischung.

17. Verwendung einer Mehrschichtstruktur gemäß Anspruch 15 bei der Herstellung von heißsiegelfähigen, sterilisierbaren und/oder pasteurisierbaren flexiblen Verpackungen.

## Claims

1. Two-component polyurethane-based adhesive composition comprising an -NCO component and an -OH component, such that:
- the -NCO component is a composition comprising:
A) at least one polyurethane prepolymer comprising at least two NCO end groups obtained by a polyaddition reaction:
- of at least one asymmetric diisocyanate monomer and
- of at least one diol,
B) at least one triisocyanate chosen from isocyanurates, biurets, adducts of diisocyanates and of triols, and their mixtures,
- the -OH component is a composition comprising at least one polyol,
- at least one of the polyols or diols is chosen from polyether polyols (or polyether diols),
- at least one of the polyols or diols is chosen from polyester polyols (or polyester diols), and
- the ratio by weight of the amount of polyether polyol (s) to the amount of polyester polyol(s), denoted r₄, ranges from 0.6 to 2.2.

2. Composition according to Claim 1, such that the asymmetric diisocyanate monomer is chosen from:
- isophorone diisocyanate (IPDI),
- 2,4-toluene diisocyanate (2,4-TDI) and its hydrogenated form,
- 2,4'-diphenylmethane diisocyanate (2,4'-MDI) and its hydrogenated form,
- and their mixtures.

3. Composition according to Claim 1 or 2, such that the diol is chosen from polyether diol(s), polyester diol(s) and their mixtures, the polyether diol(s) preferably being chosen from polyoxyalkylene diols, the saturated, linear or branched, alkylene part of which comprises from 2 to 4 carbon atoms and preferably from 2 to 3 carbon atoms, and the polyester diol(s) preferably being those having an OHN ranging from 90 to 281 mg KOH/g, preferably from 90 to 150 mg KOH/g.

4. Composition according to Claim 3, such that the diol is a mixture of polyether diol(s) and polyester diol(s).

5. Composition according to any one of Claims 1 to 4, such that the -OH composition comprises at least one polyol chosen from the group consisting of polyether polyols, polyester polyols, polyurethane prepolymers comprising at least two OH groups and their mixtures; preferably, the polyol is chosen from the group consisting of polyether polyols, polyester polyols and their mixtures.

6. Composition according to Claim 5, such that the polyol is chosen from the group consisting of polyether diols, such as, for example, polyoxyalkylene diols, the saturated, preferably linear or branched, alkylene part of which comprises from 2 to 4 carbon atoms and more preferably from 2 to 3 carbon atoms; polyester diols; polyether triols, such as, for example, polyoxyalkylene triols, the saturated, preferably linear or branched, alkylene part of which comprises from 2 to 4 carbon atoms and more preferably from 2 to 3 carbon atoms; polyalkylene triols, preferably polyalkylene triols, the saturated, preferably linear or branched, alkylene part of which comprises from 2 to 4 carbon atoms and more preferably from 2 to 3 carbon atoms; polyester triols, in particular of natural origin, such as, for example, castor oil; and of their mixtures.

7. Composition according to any one of the preceding claims, such that the polyaddition reaction takes place in the presence or absence of at least one reaction catalyst, at a reaction temperature T1 of less than 95°C, under anhydrous conditions and in amounts of diisocyanate monomer(s) and of diol(s) resulting in an NCO/OH molar ratio, denoted r₁, ranging from 1.5 to 2.5.

8. Composition according to any one of the preceding claims, such that the triisocyanate is chosen from the diisocyanate isocyanurates of following general formula (I) : 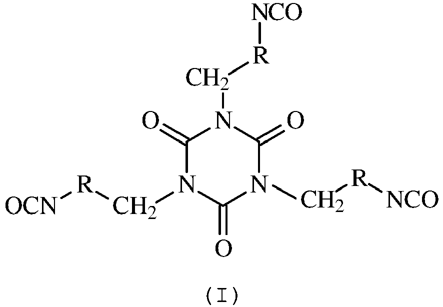 in which:
R represents a linear, branched or cyclic and aliphatic or aromatic alkylene group comprising from 4 to 9 carbon atoms,
with the proviso that the NCO groups are not connected via a covalent bond to a carbon atom forming part of an aromatic hydrocarbon ring, such as a phenyl group.

9. Composition according to any one of the preceding claims, such that the -NCO component comprises a content of aliphatic diisocyanate monomer(s) of less than or equal to 0.5% by weight, with respect to the weight of the -NCO component, and a content of aromatic diisocyanate monomer(s) of less than or equal to 0.1% by weight, with respect to the weight of the -NCO component.

10. Composition according to any one of the preceding claims, such that the -NCO and -OH components are in amounts such that the NCO/OH molar ratio, denoted r₃, ranges from 1 to 2.5.

11. Composition according to any one of the preceding claims, such that the molar ratio of the number of NCO groups present in the total amount of diisocyanate monomer(s) used for the synthesis of the polyurethane prepolymer having NCO endings A) to the number of NCO groups present in the total amount of triisocyanate(s) present in the -NCO component, denoted r₂, ranges from 3 to 8.5.

12. Composition according to the preceding claim, such that the r₂ ratio ranges from 3 to 5.

13. Composition according to any one of the preceding claims, such that the content of NCO groups of the -NCO component ranges from 220 to 280 meq NCO per 100 g of the -NCO component.

14. Composition according to any one of the preceding claims, such that it does not comprise solvent.

15. Multilayer structure comprising at least two layers of material bonded together by an adhesive layer, **characterized in that** said adhesive layer consists of the adhesive composition as defined according to any one of the preceding claims obtained by mixing the -NCO and -OH components in the crosslinked state.

16. Process for the continuous manufacture of a multilayer structure according to Claim 15, comprising the following stages:
(i) the mixing of the -NCO and -OH components at a temperature of less than or equal to 60°C, then
(ii) the coating of said mixture over the surface of a first layer of material, then
(iii) the laminating of the surface of a second layer of material over said coated surface, then
(iv) the crosslinking of said mixture.

17. Use of a multilayer structure as defined according to Claim 15 in the manufacture of heat-sealable, sterilizable and/or pasteurizable flexible packagings.
